# EUROPÄISCHE PATENTSCHRIFT

(11) **EP 0 910 720 B1**
(45) Veröffentlichungstag und Bekanntmachung des Hinweises auf die Patenterteilung: **05.04.2000**
(21) Anmeldenummer: 97930524.0
(22) Anmeldetag: 11.07.1997
(51) Int. Cl.: E06B 3/02, E06B 3/66

(54) **RAHMENLOSE TÜR- ODER FENSTERFLÜGELANORDNUNG MIT ISOLIERVERGLASUNG SOWIE VERFAHREN ZU DEREN HERSTELLUNG**
FRAMELESS DOOR OR WINDOW WING ARRANGEMENT WITH INSULATED GLAZING, AND PROCESS FOR THE MANUFACTURE THEREOF
DISPOSITIF A BATTANT, SANS CADRE, D'UNE PORTE OU D'UNE CROISEE A VITRAGE ISOLANT, ET SON PROCEDE EN FABRICATION

(30) Priorität: 11.07.1996 DE 19628034; 30.12.1996 DE 19654748; 16.01.1997 DE 19701386
(43) Veröffentlichungstag der Anmeldung: 28.04.1999
(73) Patentinhaber: Woschko, Manfred, 74245 Löwenstein-Reisach (DE); Woschko, Donat, 74182 Obersulm (DE)
(72) Erfinder: Woschko, Manfred, 74245 Löwenstein-Reisach (DE); Woschko, Donat, 74182 Obersulm (DE)
(74) Vertreter: Melzer, Wolfgang, Dipl.-Ing.
(86) Internationale Anmeldenummer: EP9703704
(87) Internationale Veröffentlichungsnummer: WO9802632

(56) Entgegenhaltungen:
- EP-A- 0 503 893
- WO-A-96/16245
- DE-A- 2 315 223
- DE-A- 3 240 639
- DE-A- 4 007 365
- DE-A- 4 343 521
- DE-A- 19 509 206
- FR-A- 2 349 021
- FR-A- 2 420 015
- FR-A- 2 572 766
- GB-A- 2 248 084

## Beschreibung

Die Erfindung betrifft eine rahmenlose Tür- oder Fensterflügelanordnung mit Isolierverglasung.

Herkömmliche Tür- und Fensterflügelanordnungen bestehen im wesentlichen aus einem Tür- bzw. Fensterrahmen, in dem eine Scheibenanordnung eingesetzt ist. Der Fensterrahmen trägt nun auch die Beschläge, mittels denen die Anordnung in einem herkömmlichen Blendrahmen (Türstock bzw. Fensterstock) einsetzbar und diesem gegenüber schwenkbar und verschließbar angeordnet ist. Insbesondere sind auch sogenannte Dreh-/Kipp-Beschläge bekannt, mittels denen die Fenster- oder Türflügelanordnung gegenüber dem Blendrahmen verschwenkt oder gekippt werden kann, je nach Stellung eines Betätigungsgriffes, wobei in einer dritten Stellung des Bestätigungsgriffes mittels des Beschlages eine feste Verriegelung im Blendrahmen erreicht wird, wobei Dichtheit nach außen durch Verwendung von umlaufenden Dichtungen erreicht ist. Herkömmlich werden ferner auch hierzu sogenannte Isolierverglasungen verwendet. Unter Isolierverglasung versteht man eine Scheibenanordnung aus mindestens zwei auf Abstand gehaltenen Glasscheiben, bei denen umlaufend ein sogenannter Abstandshalter gasdicht eingeklebt ist, wobei durch eine Randverfüllung, im allgemeinen eine Thiokolmasse, eine weitere Abdichtung nach außen erzielt ist. Der Abstandshalter enthält meist ein Feuchtigkeit absorbierendes Material, um Feuchte aus dem dicht abgeschlossenen Scheibenzwischenraum zwischen den beiden Scheiben und dem Abstandshalter zu absorbieren. Dieser Scheibenzwischenraum kann evakuiert sein, er kann jedoch auch mit bestimmten Glasmischungen gefüllt sein. Die Glasflächen können mit Wärmeschutz-, Schallschutz- und/oder Strahlungsschutz-Beschichtungen versehen sein.

Bei Türanordnungen, wie sie beispielsweise in Sportanlagen (sogenannten Squash-Courts) bekannt sind, sind schon Einscheibenverglasungen ohne Rahmen verwendet worden. Die für die Drehbewegung der Verglasung erforderlichen Beschläge sind angeklemmt oder über Bohrungen verschraubt. Falls randseitig Schienen aufgesetzt werden, sind auch Kipp-Beschlagsanordnungen möglich, allerdings wird wieder rahmenartiger Charakter verliehen.

Es besteht nun zumindest aus gestalterischen Gründen der Wunsch, auch rahmenlose Tür- und Fensterflügelanordnungen zu schaffen, die eine Isolierverglasung enthalten.

Hierzu sind bereits Vorschläge gemacht worden. Die DE-AS-1212274 zeigt eine Anordnung, bei der die innenliegende Glasscheibe gegenüber der außenliegenden Glasscheibe einen umlaufenden randseitigen Überstand besitzt, wobei ein reiner Drehbeschlag vorgesehen ist, der entweder angekittet oder angeklemmt ist, und zwar im wesentlichen an dem Überstand. Diese Anordnung erlaubt nicht die Verwendung eines Dreh-/Kipp-Beschlages.

Die DE-U1-93 043 81 zeigt eine Anordnung mit einem Abstandshalter, der mit den beiden Glasscheiben verklebt ist und der in seinem nach außen weisenden Abschnitt eine umlaufende Nut trägt, die zur Aufnahme eines Beschlages, insbesondere eines Dreh-/Kipp-Beschlages dient. Die DE-A1-43 43 521, von der der Oberbegriff des Anspruchs 1 ausgeht, zeigt eine grundsätzlich ähnliche Anordnung, bei der der Abstandshalter rückseitig derart verlängert ist, daß eine umlaufende U-förmige Vertiefung gebildet ist, die etwa bündig mit der außenliegenden Scheibe abschließt und die zur Aufnahme des Dreh-/Kipp-Beschlages dient. Auch hier ist der Abstandshalter zwischen die beiden Glasscheiben eingeklebt.

Es hat sich nun gezeigt, daß derart gestaltete Flügelanordnungen den eingangs genannten Wunsch nicht zu befriedigen vermögen. Ein wesentlicher Faktor ist, daß der Scheibenzwischenraum der Isolierverglasung auch über längere Nutzungszeiträume nach außen gasdicht bleiben muß. Selbst wenn davon ausgegangen werden wird, daß lediglich die Verwendung einer Klebung des Abstandshalters ohne Randverfüllung zu einem über längere Zeiträume dichten Abschluß des Scheibenzwischenraumes zu führen vermag, was nach bisherigen Erkenntnissen nur äußerst schwierig zu erreichen sein dürfte, sind die bei der bestimmungsgemäßen Betätigung der Beschläge ausgeübten Kräfte derart, daß bereits in kurzer Zeit die Dichtheit nicht mehr gegeben ist. Ferner sind die Belastungen unter Umständen auch derart hoch, daß der Glasrand splittert, was ebenfalls unerwünscht ist. Ein weiterer Nachteil ist, daß das Klebemittel den Umwelteinflüssen, insbesondere der Sonnenstrahlung ausgesetzt ist, wodurch verstärkte Alterung auftritt, die wiederum zu Sprödigkeit und damit zur Undichtigkeit führt. Schließlich ist zu bemerken, daß die aus technischen Gründen notwendigen Farbgebungen bei der Klebverbindung und bei dem Abstandshalter zu erheblichen ästhetischen Beeinträchtigungen führen. Außerdem läßt sich im allgemeinen der durch die Glasscheibe hindurch sichtbare Rand der Klebverbindung nicht sehr geradlinig gestalten, was ebenfalls aus ästhetischen Gründen unerwünscht ist.

Es ist daher Aufgabe der Erfindung, eine rahmenlose Tür- oder Fensterflügelanordnung mit Isolierverglasung zu schaffen, die den praktischen Anforderungen genügt.

Die Aufgabe wird durch die Merkmale des Anspruchs 1, des Anspruchs 4 bzw. des Anspruchs 36 gelöst.

Die Erfindung wird durch die Merkmale der Unteransprüche weitergebildet.

Der Grundgedanke der ersten Ausführungsform der Erfindung liegt in der Erkenntnis, daß ein in die übliche Randverfüllung eingebettetes Profil, das vom Abstandshalter unabhängig ist, die bei bestimmungsgemäßem Gebrauch des Beschlages auftretenden Kräfte ohne Störung der Dichtheit aufzunehmen vermag. Dabei ist auch wesentlich, daß auf die inzwischen langjährige industrielle Erfahrung bei der Herstellung von Isolierverglasungen ohne Einschränkungen zurückgegriffen werden kann.

Der Grundgedanke der zweiten Ausführungsform der Erfindung ist eine Anordnung, bei der zwar ebenfalls ein Profil, das vom Abstandshalter unabhängig ist, zwischen die Glasscheiben eingesetzt ist, wobei jedoch dieses Profil so mit Abstand von dem Abstandshalter zwischen den Glasscheiben angeordnet ist, insbesondere eingeklebt ist, das zwischen ihm und der bei Isolierverglasungen an sich üblichen elastischen Randverfüllung ein Luftraum verbleibt.

Damit wird der Gefahr begegnet, daß aufgrund des Luftabschlusses der Randverfüllung, üblicherweise Thiokol, diese spröde wird und die Dichtheit der Isolierverglasung nach außen nicht mehr gewährleistet ist. Wird jedoch erfindungsgemäß dieser Hohlraum oder Luftraum belassen, wird die Randverfüllung belüftet, wodurch die erwähnte Gefahr vermieden ist. Dabei ist auch wesentlich, daß auf die inzwischen langjährige industrielle Erfahrung bei der Herstellung von Isolierverglasungen mit der einzigen Einschränkung zurückgegriffen werden kann, daß außerhalb der Randverfüllung ausreichend Platz zwischen den Gasscheiben verbleiben muß, damit das Profil eingesetzt werden kann.

Gemäß einem weiteren Aspekt der vorliegenden Erfindung weist das Profil in seinen Längsschenkeln und/oder seinem Querschenkel Kanäle auf, in die Metallstäbe einführbar oder eingebettet sind, wobei gegebenenfalls in zumindest einige der Kanäle abschnittsweise Schrauben aufgenommen werden können. Diese Metallstäbe sind dehnungshemmende Elemente, wodurch unterschiedliche Dehnungen von Glasscheibe und Profil bei Temperaturänderungen vermieden werden können.

Gemäß einem weiteren Aspekt der vorliegenden Erfindung sind an den nach außen weisenden Flächen der Schenkel des Profils Metalleisten fest angebracht, derart, daß die Glasscheibe zumindest an den Metalleisten anliegen.

Auch dies dient dazu, Dehnungsschwankungen bei Temperaturbelastung zwischen Glas und dem Material des Profils, üblicherweise Kunststoff, auszugleichen, wobei diese Metalleiste auch Träger des Klebstoffs ist, der die Verbindung zwischen den Glasscheiben und dem Profil erreicht.

Wenn gemäß einer Weiterbildung das Profil gemäß der vorliegenden Erfindung lediglich fest mit dem umlaufenden randseitigen Überstand der innenliegenden Glasscheibe verbunden wird insbesondere verklebt wird und sich gegen den umlaufenden Rand der außenliegenden Glasscheibe lediglich abstützt, wenn auch abgedichtet, sind Besonderheiten bei der Herstellung der Isolierverglasung nicht zu beachten. Es kann sich um Serienprodukte handeln, bei denen dann zusätzlich das erfindungsgemäß ausgebildete Profil aufgebracht wird. Es hat sich herausgestellt, daß eine sehr gute feste Verbindung zwischen dem Profil und der innenliegenden Glasscheibe erreichbar ist, die den mechanischen Belastungen standhält, die durch die Aufnahme und die Betätigung eines Beschlages in dem Profil verursacht werden.

Die Erfindung wird im übrigen durch die Merkmale der Unteransprüche weitergebildet.

Die Verwendung von Verbundscheibenglas und insbesondere von Einscheibensicherheitsglas für zumindest die innenliegende Glasscheibe, erlaubt weitere zusätzliche Verbesserungen. Insbesondere kann eine randseitig umlaufende lichtundurchlässige Abdeckung geschaffen werden, die in ihrem Verlauf sehr genau fertigbar ist und die zwangsläufigen Fertigungsungenauigkeiten bei der Herstellung von Isolierverglasungen abzudecken vermag. Ferner ist eine ästhetische farbliche Gestaltung möglich, ohne die Außenfläche der Glasscheibe verändern zu müssen. Schließlich ist es insbesondere bei Einscheibensicherheitsglas einfacher möglich, Bohrungen vorzusehen, die zur Aufnahme der Betätigungsglieder des Beschlages geeignet sind. Insbesondere bei Einscheibensicherheitsglas sind lediglich auf dem Kunstsektor bekannte Veredelungsmöglichkeiten einsetzbar, nämlich insbesondere eine Emaillierung im Randbereich, die zum einen einen guten Haftgrund für das Kleb-Haftmaterial und die Randverfüllungsmasse bietet und zum anderen die Dichtheit und Festigkeit nicht beeinträchtigt.

Schließlich läßt sich durch geeignete Zuordnung von Lippendichtungen eine sichere Abdichtung nach außen der in den Blendrahmen eingesetzten Flügelanordnung auch bei hoher Witterungsbelastung erreichen.

Das erfindungsgemäße Verfahren zur Herstellung einer Tür- oder Fensterflügelanordnung mit Isolierverglasung gemäß der ersten Ausführungsform macht weitestgehend Gebrauch von an sich bekannten Verfahrensschritten, wobei lediglich eine andere Reihenfolge erforderlich ist und das bei künstlerischer Bearbeitung von Floatglas bekannte Emaillieren industriell durchgeführt werden muß.

Die Erfindung wird anhand der in der Zeichnung dargestellten Ausführungsbeispiele näher erläutert. Es zeigen:
- Fig. 1: schematisch im Schnitt den Randbereich einer erfindungsgemäßen rahmenlosen Tür- bzw. Fensterflügelanordnung mit Isolierverglasung gemäß der ersten Ausführungsform;
- Fig. 2: schematisch eine Aufsicht einer solchen Flügelanordnung;
- Fig. 3 bis 6: schematisch die Anordnung und Zuordnung einer erfindungsgemäßen Flügelanordnung bei in einem Blendrahmen eingesetztem Zustand;
- Fig. 7: schematisch die Ausbildung einer Glasscheibe in Form einer Verbundglasscheibe;
- Fig. 8: schematisch im Schnitt den Randbereich einer erfindungsgemäßen rahmenlosen Tür- bzw. Fensterflügelanordnung mit Isolierverglasung gemäß der zweiten Ausführungsform;
- Fig. 9: schematisch eine Aufsicht einer solchen Flügelanordnung;
- Fig. 10: schematisch im Schnitt den Randbereich einer anderen erfindungsgemäßen rahmenlosen Tür- bzw. Fensterflügelanordnung mit Isolierverglasung;
- Fig. 11: schematisch im Schnitt den Randbereich einer noch anderen erfindungsgemäßen rahmenlosen Tür- bzw. Fensterflügelanordnung mit Isolierverglasung;
- Fig. 12: schematisch im Schnitt den Randbereich einer weiteren erfindungsgemäßen rahmenlosen Tür- bzw. Fensterflügelanordnung mit Isolierverglasung.

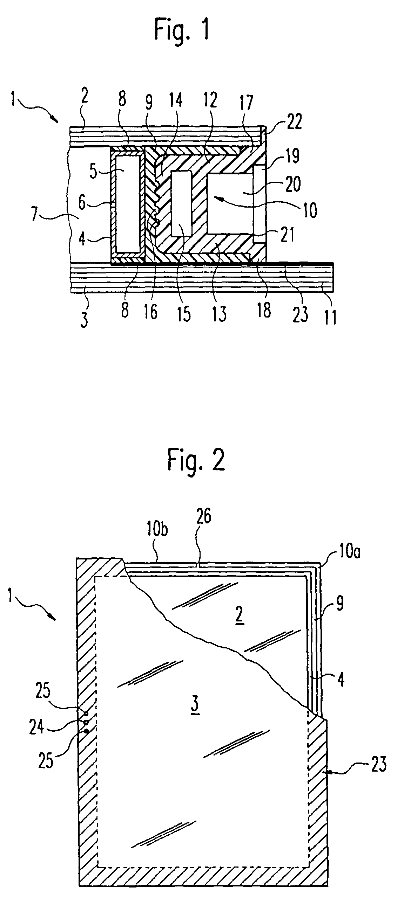

Fig. 1 zeigt eine erfindungsgemäße Tür- oder Fensterflügelanordnung 1, die nach dem Prinzip einer Isolierverglasung aufgebaut ist. Sie weist demnach auf eine außenliegende Glasscheibe 2, eine innenliegende Glasscheibe 3 und einen Abstandshalter 4. Der Abstandshalter 4 ist von handelsüblicher Bauart und besteht aus einem Hohlprofil mit Rechteckquerschnitt, in dessen Innenraum 5 ein Feuchte absorbierendes Material aufgenommen sein kann, wobei der Innenraum 5 über kleine Bohrungen 6 mit dem Scheibenzwischenraum 7 in Verbindung steht.

Wie bei Isolierverglasungen üblich, ist der Abstandshalter 4 mittels eines Silikon- oder Butyl-Haftstreifens 8 mit geringem Abstand von den Außenrändern der Glasscheiben 2 und 3 zwischen diese eingesetzt. Somit ist eine umlaufende Randfuge gebildet, die wie bei Isolierverglasungen üblich, mit einer Randverfüllung 9 versehen ist, die üblicherweise aus Thiokol besteht. Hierdurch wird der Scheibenzwischenraum 7 gas- und feuchtigkeitsdicht nach außen abgeschlossen. Der Scheibenzwischenraum 7 kann, wie an sich bekannt, mit einem Gas gefüllt oder (teil-)evakuiert sein.

Gemäß der ersten Ausführungsform der Erfindung ist nun in die Randverfüllung 9 ein vom Abstandshalter 4 getrenntes Profil 10 eingebettet, das einen im wesentlichen U-förmigen Querschnitt besitzt und nach außen offen ist und das zur Aufnahme eines Beschlages insbesondere eines Dreh-/Kipp-Beschlages üblicher Bauart dient. Ferner weist die innenliegende Glasscheibe 3 einen umlaufenden randseitigen Überstand 11 gegenüber der außenliegeden Glasscheibe 2 auf.

Das Profil 10 weist im Querschnitt einen außenliegenden Schenkel 12 und einen innenliegenden Schenkel 13 auf, die im wesentlichen parallel zu den Glasscheiben 2 bzw. 3 verlaufen, jedoch einen geringen Abstand aufweisen, derart daß die Einbettung in die Randverfüllung 9 erfolgen kann. Der Verbindungs- oder Querschenkel 14, der aus fertigungstechnischen Gründen einen Hohlraum 15 aufweisen kann, kann an seiner Außenseite, die zum Abstandshalter 4 weist, Rillen 16 aufweisen, welche eine bessere Einbettung gestatten. Beide Schenkel 12 und 13 stützen sich über kleine Wülste 17 bzw. 18 im wesentlichen linienförmig an der zugeordneten Glasscheibe 2 bzw. 3 ab, wobei diese Abstützung im wesentlichen am vom Scheibenzwischenraum 7 entfernten Ende der Schenkel 12 bzw. 13 erfolgt, wie das dargestellt ist. Damit wird nicht nur vermieden, daß beim Einbetten Masse der Randverfüllung 9 austreten kann, sondern auch eine gute Führung des Profils 10 zwischen den Scheiben 2 und 3 und damit des in dem Profil 10 aufgenommenen Beschlags sichergestellt, wobei unnötige mechanische Belastungen vermieden werden.

Der Raum zwischen den Schenkeln 12, 13 und 14 enthält einen breiteren äußeren Abschnitt 19, der die flächigen Abschnitte des Beschlages aufzunehmen und zu führen vermag und einen tieferen Abschnitt 20, der die für Betätigungselemente erforderlichen Vorsprünge des Beschlags größerer Abmessungen aufzunehmen vermag, ohne daß die Bewegung gestört und beeinträchtigt wäre. Die beiden Abschnitte 19, 20 des Raumes sind durch eine Schulter 21 voneinander getrennt.

Der aus fertigungstechnischen Gründen vorgesehene Hohlraum 15 im Querschenkel 14 ermöglicht aber auch, daß der die Rillen 16 aufweisende Abschnitt elastisch ausweichen kann, falls dies erforderlich ist.

Beim dargestellten Ausführungsbeispiel weist das Profil 10 darüberhinaus am vom Scheibenzwischenraum 7 entfernten Ende des außenliegenden Schenkels 12 einen nach außen vorspringenden Lappen 22 auf, der im eingebetteten Zustand wie dargestellt an der Stirnseite der außenliegenden Glasscheibe 2 zur Anlage kommt. Dieser Lappen kann daher als Anschlag dienen und so eine durchgehend gleichmäßige Ausrichtung des Profils 10 gegenüber den Glasscheiben 2 und 3 sicherstellen.

Bei dem in Fig. 1 dargestellten Ausführungsbeispiel weist die innenliegende Glasscheibe 3 randseitig umlaufend eine zum Scheibenzwischenraum 7 weisende Emaillierung 23 auf, deren Breite so bemessen ist, daß, wie dargestellt, Abstandshalter 4 und Profil 10 sowie die dazwischen befindliche Randverfüllung 9 abgedeckt sind.

Es hat sich gezeigt, daß eine derartige Abdeckung wie die Emaillierung 23 in ihrem Randverlauf sehr genau hergestellt werden kann, was für das Verlegen des Silikon- oder Butylstreifens 8 nicht gewährleistet ist, so daß ein ästhetisch sauberer Abschluß erzielt werden kann. Ferner kann diese Emaillierung 23 das Glas in diesem Bereich undurchsichtig machen und/oder farblich in besonderer Weise gestalten. Diese Emaillierung 23 ist eine besondere glastechnische Handlung, die einen Einbrennvorgang benötigt. Dies war bisher nur bei künstlerischen Arbeiten bekannt. Es zeigt sich jedoch, daß trotz der Emaillierung 23 ein sehr guter Haftgrund für den Silikon- bzw. Butylstreifen 8 erzielt wird und auch für die Randverfüllung 9, so daß der gasdichte und flüssigkeitsdichte Abschluß des Scheibenzwischenraumes 7 weiterhin gewährleistet ist.

Gute Ergebnisse mit der Emaillierung 23 konnten bisher nur für Einscheibensicherheitsglas erzielt werden. Die Verwendung von Einscheibensicherheitsglas hat darüberhinaus den Vorteil, daß die Durchgangsöffnungen, die für die Betätigungsglieder des Beschlages erforderlich sind, in einfacher und sicherer Weise anbringbar sind.

Fig. 2 zeigt die Anordnung solcher Durchgangsbohrungen, wobei es sich um eine mittlere, etwas größere Bohrung 24 für den Durchtritt des Betätigungselementes und zwei benachbarte, etwas kleinere Bohrungen 25, für die Befestigungselemente des Betätigungsgliedes handelt. Weitere Bohrungen sind nach heutigen Stand der Technik für Dreh-/Kipp-Beschläge nicht erforderlich. Einscheibensicherheitsglas hat noch einen weiteren Vorteil darin, daß die Ränder sehr gut abgeschliffen (gefast) werden können, wodurch die Verletzungsgefahr stark vermieden ist. Außerdem ist die Splittergefahr sehr stark herabgesetzt.

Die Vorteile einer solchen rahmenlosen Tür- oder Fensterflügelanordnung mit Isolierverglasung sind offenbar. Neben allen Vorteilen einer Isolierverglasung ist sehr hohe Lichtdurchflutung erzielt. Ferner ist die Anordnung sehr pflegeleicht. Im Gegensatz zu einem herkömmlichen Rahmenfenster sind keine Ecken und Kanten vorhanden, was die Reinigung sehr erleichtert. Ferner ist freie Farbwahl möglich, insbesondere bei einer Emaillierung 23. Die Bedienung ist gegenüber herkömmlichen Rahmenfenstern unverändert, da identische Dreh-/Kipp-Beschläge verwendet werden können. Architektonisch gesehen kann bei großen Gebäudeflächen die Lage von fest eingebauten Glasscheiben und von zu öffnenden Flügelanordnungen beliebig gewählt werden, da der Rahmen entfällt und auch für den Blendrahmen keine zusätzlichen Anforderungen zu beachten sind.

Da das Profil 10 lediglich zur Aufnahme und Führung des Beschlages dient, ist es in einfacher Weiser als Kunststoffprofil ausführbar, beispielsweise in einem Stranggieß-Verfahren oder einem Spritzgieß-Verfahren.

Da der Scheibenzwischenraum 7 mittels des Abstandshalters 4 nach außen dicht abgeschlossen ist, kann das Profil 10 über den Umfang der Flügelanordnung gesehen, mehrteilig ausgebildet sein, wobei an den Stoßstellen eine hohe Genauigkeit nicht zu beachten ist. Beispielsweise kann an eine in Umfangsrichtung der Flügelanordnung betrachtet, C-förmige bzw. umgekehrt C-förmige Ausbildung gedacht werden, wie sie beispielsweise anhand von Fig. 2 erläutert ist. Die beiden Profilteile 10a und 10b sind über Stoßfugen 26 aneinanderstoßend angeordnet. Die Lage des Stoßfugen 26 und deren Breite wird dabei so bestimmt, daß etwa beim Einbetten ausquellende Masse der Randverfüllung 9 keinerlei Beeinträchtigung bei der Bewegung des Beschlages im Raum 19 ggfs. auch im Raum 20 zur Folge hat. Auch hierzu kann der Hohlraum 15 im Querschenkel 14 von Bedeutung sein. Dies erleichtert auch das Einbetten, da die beim Einbetten zu verdrängende Luft in einfacher Weise entweichen kann. Selbstverständlich ist auch eine mehrteile Ausbildung des Profils 10 möglich und können die Stoßfugen 26 auch an den Ecken vorgesehen sein (nicht im einzelnen dargestellt).

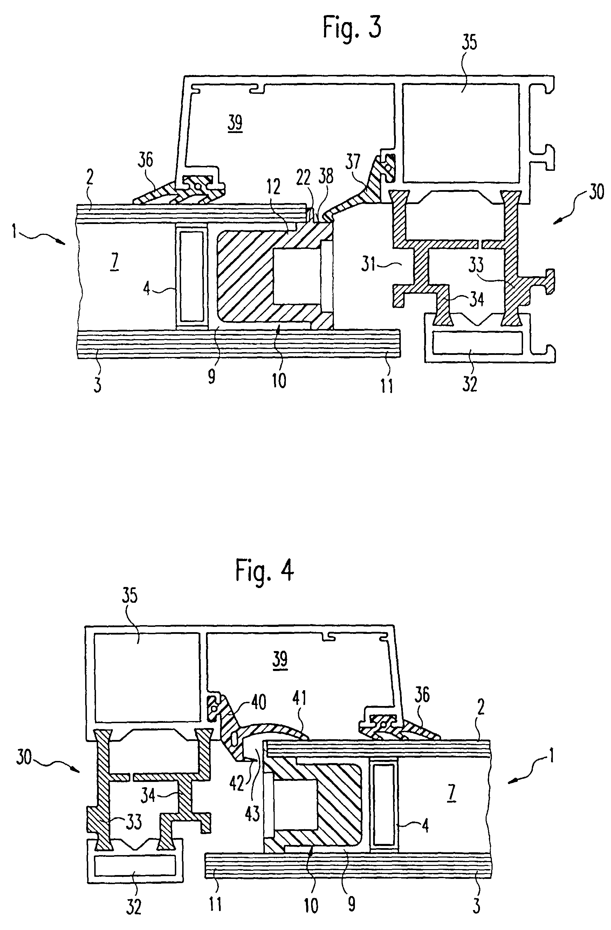

Anhand der Fig. 3 bis 6 werden im folgenden verschiedene Ausführungsformen mit jeweiliger Zuordnung zu einem Blendrahmen 30 geschildert, wobei gleiche Bezugszeichen wie in Fig. 1 gleiche Bauteile bezeichnen und wobei lediglich Abweichungen davon erläutert werden.

Ferner ist zu bemerken, daß beispielsweise bei dem Profil 10 der Hohlraum 15 und die Rillen 16 nicht gesondert dargestellt sind. Selbstverständlich können diese in der Fig. 1 dargestellten Form oder in ähnlicher Form vorhanden sein. Ferner ist nicht im einzelnen dargestellt, daß die Wulste 17 und 18 (Fig. 1) fertigungstechnisch hilfreiche Schrägungen zeigen können. In diesem Zusammenhang ist zu erwähnen, daß das Profil 10 nicht notwendigerweise ein Kunststoffprofil sein muß, sondern auch aus einem anderen geeigneten Material, beispielsweise Aluminium, bestehen kann, wenn dies beim jeweiligen Anwendungsfall zweckmäßig ist.

Ferner ist nochmals zu erwähnen, daß in keiner der Figuren der handelsübliche Beschlag dargestellt ist.

Ganz allgemein ist die Flügelanordnung 1 in einen Blendrahmen 30 eingesetzt, wobei jeweils die Schließstellung dargestellt ist, in der der im Profil 10 aufgenommene Beschlag über nicht dargestellte Eingriffsmittel in entsprechende Nuten 31 des Blendrahmens 30 eingreift, wie das an sich bekannt ist.

Der Blendrahmen 30 ist gebäudeseitig fest verankert in an sich bekannter und nicht im einzelnen dargestellter Weise. Bei den Fig. 3 und 4 ist der Blendrahmen 30 durch ein sogenanntes thermisch getrenntes Aluminiumprofil gebildet, d. h. durch ein Innenprofil 32, wärmeisolierende Verbindungsglieder 33, 34 und ein außenseitiges Abdeckprofil 35. Das Abdeckprofil 35 springt gegenüber der zu verschließenden Fenster- oder Türöffnung derart vor, daß im geschlossenen Zustand der Flügelordnung 1 deren Randbereich über mindestens ein Dichtungselement zur abdichtenden Anlage gegen das Abdeckprofil 35 kommt. In den Fig. 3 und 4 trägt das am weitesten in die Fensteröffnung vorspringende und der Flügelanordnung 1 am nächsten kommende Element des Abdeckprofils 35 eine Lippendichtung 36. Die Lage dieser Lippendichtung 36 ist im Ausführungsbeispiel derart, daß von außen betrachtet durch die Lippendichtung 36 und das Abdeckprofil 35 der Bereich der außenliegenden Glasscheibe 2 der Flügelanordnung 1 überdeckt ist, der dem Abstandshalter 4, der Randverfüllung 9 und dem Profil 10 zugeordnet ist. Eine Abdeckung, wie sie die Emaillierung 23 für die innenliegende Glasscheibe 3 darstellt (Fig. 1 und Fig. 2), ist daher in diesem Bereich nicht erforderlich. Bei einer anderen Gestaltung der Zuordnung von Lippendichtung 36 und Abdeckprofil 35 zur Flügelanordnung 1 kann jedoch auch für die außenliegende Scheibe 2 eine der Emaillierung 23 entsprechende Abdeckung vorgesehen sein (nicht dargestellt).

Gemäß Fig. 3 ist an einem gebäudenahen Abschnitt des Abdeckprofils 35 eine weitere Lippendichtung 37 gehaltert, deren Lippe gegen einen Abschnitt des Profils 10 zur Anlage kommt. Bei diesem Ausführungsbeispiel ist der Lappen 22 nicht an dem äußersten vom Scheibenzwischenraum 7 entfernten Ende des außenliegenden Schenkels 12 vorgesehen, sondern weist einen gewissen Abstand auf, durch den eine Abstützfläche 38 am Profil 10 definiert ist, gegen den die Lippendichtung 37 zur Anlage kommt, wenn die Flügelanordnung 1 im Schließzustand ist. Fig. 3 gibt auch Hinweise auf die Bemessung des Überstandes 11 der innenliegenden Glasscheibe 3. Dieser Überstand ist so zu bemessen, daß bei geöffneter Flügelanordnung 1 die von dem Scheibenzwischenraum 7 wegragenden Elemente des Beschlages nicht stören, insbesondere nicht sichtbar sind, im geschlossenen Zustand der Flügelanordnung 1 jedoch ihr Eingriff bei Betätigung des nicht dargestellten Betätigungselementes in die Nut 31 gewährleistet ist.

Beim Ausführungsbeispiel gemäß Fig. 3 ist das Abdeckprofil 35 ferner so ausgestaltet, daß zwischen der außenliegenden Lippendichtung 36 und der innenliegenden Lippendichtung 37 ein Hohlraum 39 definiert ist, in dem trotz der Lippendichtung 36 eingedrungenes Wasser ablaufen kann und ggfs. über Öffnungen nach außen abgeführt werden kann.

Fig. 4 zeigt eine demgegenüber etwas in anderer Weise gestaltete Anordnung und Ausbildung der zweiten Lippendichtung, die hier mit dem Bezugszeichen 40 versehen ist und eine erste gegen die außenliegende Glasscheibe 2 zur Anlage kommende Lippe 41 und eine zweite gegen eine Stirnfläche des Profils 10 zur Anlage kommende Lippe 42 aufweist. Neben dem Hohlraum 39 ist daher zwischen den Lippen 41 und 42 ein weiterer Hohlraum 43 definiert, der ebenfalls zur Aufnahme von trotz aller bisherigen Dichtungsmaßnahmen eingetretenem Wasser dienen kann.

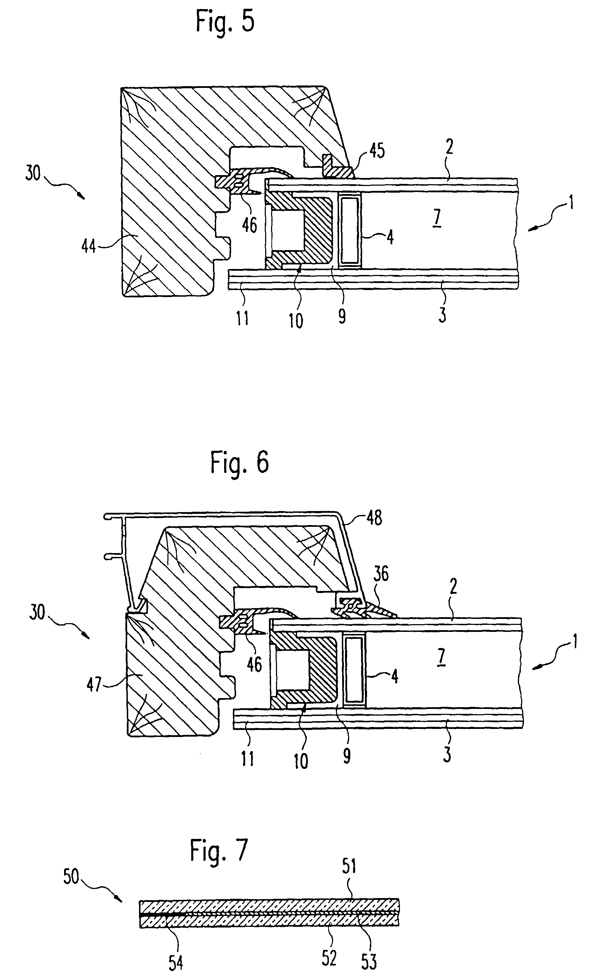

Fig. 5 unterscheidet sich von Fig. 3 und Fig. 4 dadurch, daß der Blendrahmen 30 durch ein Holz- oder Kunststoffprofil 44 gebildet ist, in das eine mit der Lippendichtung 36 vergleichbare geringfügig anders gestaltete Lippendichtung 45 und eine mit der Lippendichtung 40 vergleichbare geringfügig anders profilierte Lippendichtung eingesetzt sind. Fig. 6 zeigt zwar ebenfalls ein Holz- oder Kunststoffprofil 47 für den Blendrahmen, wobei diese Profil 47 jedoch außenseitig von einem weiteren Metallprofil 48 etwa einem Aluminiumprofil abgedeckt ist, das die Lippendichtung 36 trägt, während die Lippendichtung 46 wie zuvor in dem Holz- oder Kunststoffprofil 47 eingesetzt ist. Es zeigt sich, daß die erfindungsgemäße Flügelanordnung 1 in Blendrahmen 30 unterschiedlichster gestalterischer Formen einsetzbar ist, wobei durch die Ausbildung der Flügelanordnung 1 grundsätzlich bedingte ästhetische Effekte erzielt werden können, ohne die Abdichtung zu vernachlässigen.

Anhand Fig. 1 wurde erläutert, daß die Emaillierung 23 eine optische Abdeckung bewirkt, wobei gleichzeitig eine gute Haftung sowohl des Silikon- bzw. Butylstreifens 8 als auch der Randverfüllung 9 gewährleistet ist. Dies kann auch in anderer Weise erzielt werden, beispielsweise bei einer Verbundglasscheibenanordnung 50 gemäß Fig. 7. Diese besteht aus (mindestens) zwei Glasscheiben 51 und 52, zwischen die eine durchsichtige Kunststoffolie 53 laminatartig geschichtet ist. Diese Kunststoffolie 53 ist nun randseitig entweder durch Behandlung undurchsichtig gemacht oder durch eine undurchsichtige ggfs. farbige Folie 54 ersetzt, wobei die gleiche Wirkung wie durch die Emaillierung 23 erzielt ist. Selbstverständlich könnte auch in diesem Bereich eine Behandlung einer der Glasscheiben 51 oder 52 zur Erzielung des gleichen Effektes bewirkt worden sein. Wesentlich ist, wie erwähnt, die optische Abdeckung des Bereiches, in dem sich der Abstandshalter 4, die Randverfüllung 9 und das Profil 10 befinden unter gleichzeitiger Beibehaltung der Haftfähigkeit bezüglich der Randverfüllung 9 und des Silikon- bzw. Butylstreifens 8. Selbstverständlich sind auch Kombinationen von Verbundglasscheibenanordnungen und Einscheibensicherheitsglasanordnungen möglich.

Wie bereits erwähnt, ist der Scheibenzwischenraum 7 mit einem Gas füllbar oder evakuierbar, wie das üblich ist. Es ist ferner üblich, im Glaszwischenraum 7 Beschichtungen der Glasscheiben 2, 3 vorzunehmen, um eine Wärmeschutz-, Schallschutz- und/oder Strahlungsschutzwirkung (gegen UV- oder IR-Strahlung) zu erzielen. Beschichtungsmaterialien, Schichtenaufbauten und Verfahren zur Herstellung solcher Schichten sind grundsätzlich vielfältig bekannt.

Bei der Herstellung von Isolierverglasungen unter Verwendung beschichteter Glasscheiben wird üblicherweise eine beschichtete Float-Glasscheibe zugeschnitten, randseitig von der Beschichtung befreit und dann dem Zusammenbau zugeführt. Dies ist allerdings nicht möglich, wenn eine erfindungsgemäße Flügelanordnung 1 hergestellt werden soll, die eine Emaillierung 23 oder eine vergleichbare Oberflächenbehandlung einer der Glasscheiben 2 und/oder 3 enthält oder bei der ein eine besondere Behandlung erforderndes Material verwendet ist, wie zum Beispiel Einscheibensicherheitsglas.

Ferner ist beim Einbetten des Profils 10 in die Randverfüllung 9 darauf zu achten, daß diese Einbettung erfolgt, solange das zur Randverfüllung 9 verwendete und bereits eingefüllte Material noch verformbar ist, also zumindest zähflüssige Konsistenz aufweist. Demnach muß das bekannte, herkömmliche Verfahren zur Herstellung von Isolierverglasungen in bestimmten Schritten modifiziert und geändert werden.

Zunächst sind die beiden Glasscheiben 2 und 3 in ihren Abmessungen ausgehend von einer üblichen Float-Glasscheibe zuzuschneiden. Anschließend sind die erwähnten Öffnungen 24 und 25 anzubringen und ist die Emaillierung 23 vorzunehmen. Damit die Emaillierung 23 in das Glasmaterial der Glasscheibe 2 bzw. 3 eindringt und den notwendigen Haftgrund erzielt, ist die Emaillierung 23 im Rahmen einer Wärmebehandlung einzubrennen. Da die Emaillierung 23 nach gegenwärtigem Stand der Technik nur bei Einscheibensicherheitsglas dauerhaft ist, ist dann die für die Herstellung von Einscheibensicherheitsglas notwendige Wärmebehandlung gleichzeitig oder zeitlich getrennt durchzuführen.

Falls die Glasscheiben 2 und/oder 3 zu beschichten sind, ist dann der Beschichtungsvorgang durchzuführen, wobei nach dem Beschichtungsvorgang der Bereich, in dem der Abstandshalter 4, das Profil 10 und die Randverfüllung 9 vorzusehen sind, von der Beschichtung befreit ist bzw. wieder befreit wird.

Dann wird in herkömmlicher Weise, wie das für Isolierverglasungen bekannt ist, der Zusammenbau durchgeführt, d. h., der Abstandshalter 4 mit dem Silikon- oder Butylstreifen 8 versehen und zwischen die Scheiben 2 und 3 an den vorgesehenen Stellen eingesetzt. Anschließend wird die Randverfüllung durchgeführt, die üblicherweise mit Thiokol erfolgt. Bevor die Thiokol-Randverfüllung 9 ihren ausgehärteten elastischen Zustand erreicht und noch zähflüssig ist, wird das Profil 10 durch Eindrücken in die Randverfüllung 9 eingebettet. Erst dann werden die notwendigen Schritte unternommen, damit die Randverfüllung 9 die notwendige feste jedoch elastische Konsistenz erhält.

Dann kann der handelsübliche Dreh-/Kipp-Beschlag eingesetzt und montiert werden zusammen mit den zugehörigen Betätigungsgliedern, für die die Bohrungen 24 und 25 vorgesehen sind. Es wird dabei erforderlich sein, zumindest die Bohrung 24 noch durch das Profil 10 hindurch fortzusetzen, sofern nicht bereits bei der Zubereitung einzelner Profilteile (z. B. 10a und 10b) an geeigneter Stelle entsprechende Bohrungen vorgenommen werden konnten.

Bereits dann kann die Flügelanordnung 1 in die Fensteröffnung bzw. in deren Blendrahmen 30 in üblicher Weise eingesetzt werden und ist betriebsbereit.

In der folgenden Beschreibung einer zweiten Ausführungsform sowie weiterer Ausführungsbeispiele sind soweit möglich die gleichen Bezugszeichen wie in den Fig. 1 bis 7 verwendet, wobei bei gleicher Wirkung dem Bezugszeichen ein Strich hinzugefügt ist.

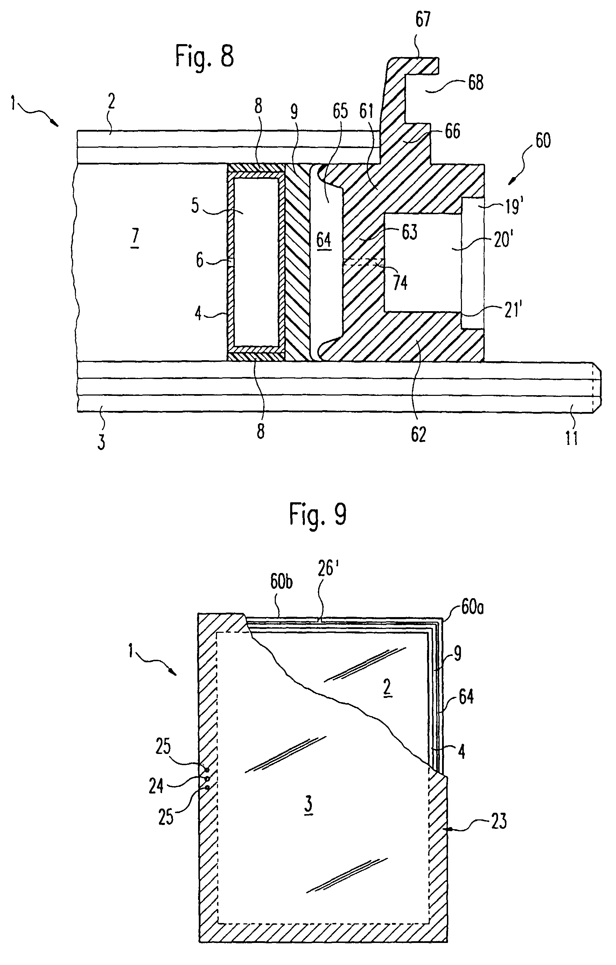

Gemäß der zweiten Ausführungsform gemäß den Fig. 8 bis 11 ist nun mit Abstand von der Randverfüllung 9 zwischen die Glasscheiben 2 und 3 ein vom Abstandshalter 4 getrenntes Profil 60 einsetzt, das einen im wesentlichen U-förmigen Querschnitt besitzt und nach außen offen ist und das zur Aufnahme eines Beschlages, insbesondere eines Dreh-/Kipp-Beschlages üblicher Bauart, dient. Ferner weist die innenliegende Glasscheibe 3 einen umlaufenden randseitigen Überstand 11 gegenüber der außenliegenden Glasscheibe 2 auf, wobei sich innenliegend und außenliegend auf die Lage der Tür- oder Fensterflügelanordnung 1 im in einem Gebäude eingebauten Zustand bezieht. Das Profil 60 weist im Querschnitt einen außenliegenden Schenkel 61 und einen innenliegenden Schenkel 62 auf, die im wesentlichen parallel zu den Glasscheiben 2 bzw. 3 verlaufen, und über deren bezüglich des Profils 60 außenliegende Flächen die feste Verbindung zu den Glasscheiben 2 bzw. 3 erfolgt, vorzugsweise über eine Klebverbindung. Der die Schenkel 61, 62 verbindende Querschenkel 63 ist von der Randverfüllmasse 9 derart beabstandet, daß ein Luftraum 64 zwischen der Randverfüllmasse 9 und dem Profil 60 gebildet ist. Der Luftraum 64 kann dabei noch dadurch vergrößert sein, daß der Querschenkel 63 bezüglich der dem Abstandshalter 4 nächstliegenden Abschnitte der Schenkel 61 und 62 einen Rücksprung 65 aufweist. In dem Querschenkel 63 können darüber hinaus Durchgangsöffnungen 74 vorgesehen sein, über die ein Luftaustausch mit dem Luftraum 64 nach außen möglich ist, wobei diese Durchgangsöffnungen 74 auch zur Aufnahme von Befestigungsschrauben dienen können.

Hierdurch wird eine gute Führung des Profils 60 zwischen den Glasscheiben 2 und 3, und zwar auch des in dem Profil 60 aufgenommenen Beschlages sichergestellt, wobei unnötige mechanische Belastungen, insbesondere des Abstandshalters 4, vermieden werden. Durch das Vorsehen des Luftraumes 64 und die Möglichkeit eines Luftaustausches nach außen wird vermieden, daß die Randverfüllmasse 9 aufgrund physikalischer und/oder chemischer Reaktionen spröd, und dadurch undicht wird.

Der Raum zwischen den Schenkeln 61, 62, 63 enthält einen breiteren äußeren Abschnitt 19', der die Abschnitte des Beschlages aufzunehmen und zu führen vermag, und einen tieferen Abschnitt 20', der die für Betätigungselemente erforderlichen Vorsprünge des Beschlages größerer Abmessungen aufzunehmen vermag, ohne daß die Bewegung gestört und beeinträchtigt wäre. Die beiden Abschnitte 19' und 20' des Raumes sind durch eine Schulter 21' voneinander getrennt.

Bei den dargestellten Ausführungsbeispielen weist das Profil 60 darüber hinaus am vom Scheibenzwischenraum 7 entfernten Ende des außenliegenden Schenkels 61 einen nach außen vorspringenden Lappen 66 auf, der im eingesetzten Zustand, wie dargestellt, an der Stirnseite der außenliegenden Glasscheibe 2 zur Anlage kommt. Dieser Lappen 66 kann daher als Anschlag dienen und so eine durchgehend gleichmäßige Ausrichtung des Profils 60 gegenüber den Gasscheiben 2 und 3 sicherstellen.

Wie in Fig. 8 nicht näher ausgeführt, jedoch in Fig. 9 angedeutet, kann auch bei dieser Ausführungsform die innenliegende Glasscheibe 3 randseitig umlaufend eine zum Scheibenzwischenraum 7 weisende Emaillierung 23 aufweisen, deren Breite so bemessen ist, daß, wie in Fig. 9 dargestellt, Abstandshalter 4 und Profil 60 sowie die dazwischen befindliche Randverfüllung 9 und der Luftraum 64 abgedeckt sind.

Es ist ferner zu erwähnen, daß das Profil 60 nicht notwendigerweise ein Kunststoffprofil sein muß, sondern auch aus einem anderen geeigneten Material, beispielsweise Aluminium bestehen kann, wenn dies beim jeweiligen Anwendungsfall zweckmäßig ist.

Die Zuordnung einer erfindungsgemäßen Flügelanordnung zu einem Blendrahmen ist bereits anhand der dortigen Fig. 3 bis 6 ausführlich erläutert. Es wird ausdrücklich Bezug auf diese Erläuterungen genommen.

Dort ist u.a. bereits darauf hingewiesen, daß der Wasserdichtheit nach außen große Bedeutung zukommt. Einen Beitrag zur Verbesserung der Wasserdichtheit nach außen wird dadurch erreicht, daß der Lappen 66 einen nach außen vorspringenden Vorsprung 67 aufweist, wobei dieser eine etwa U-förmige Vertiefung 68 aufweisen kann, die in Umfangsrichtung offen ist. Hierdurch wird sowohl die Anlage weiterer Lippen von Lippendichtungen von im Blendrahmen befestigten Dichtungen ermöglicht, als auch ein zusätzliches Hindernis vor witterungsbedingtem Eindringen von Wasser gegeben.

Es sei ferner darauf hingewiesen, daß anstelle der durch eine Emaillierung 23 gebildeten Abdeckung auch die Abdeckung verwendet werden kann, wie sie in Fig. 7 ausführlich geschildert ist. Hier wird ebenfalls ausdrücklich Bezug auf diese Erläuterungen genommen.

Bei der Herstellung einer Flügelanordnung 1 gemäß dieser Ausführungsform der Erfindung ist darauf zu achten, daß die Randverfüllung 9 bereits so weit verfestigt ist, daß beim Einführen des Profils 60 die Randverfüllung 9 nicht mehr fließen kann. Im übrigen kann auf das bekannte herkömmliche Verfahren zur Herstellung von Isolierverglasungen zurückgegriffen werden.

Im Gebrauch kann es nun erhebliche Temperaturschwankungen geben, die dann, wenn die Ausdehnungsdifferenzen zwischen dem Glas der Scheiben 2, 3 einerseits und dem Material des Profils 60 andererseits zu groß ist, zu Schwierigkeiten führen können. Es kann zu Spannungen kommen, die die sichere Handhabung des Beschlages nicht mehr gewährleisten oder durch die der Halt des Profils 60 zwischen den Glasscheiben 2 und 3 nicht mehr gewährleistet ist.

Die erfindungsgemäße Lösung dieses Problems ist sowohl bei dem Profil 60 gemäß Fig. 8 als auch bei dem Profil 10 gemäß Fig. 1 anwendbar. Diese Lösung wird jedoch lediglich anhand Weiterbildungen des Profils 60 näher erläutert.

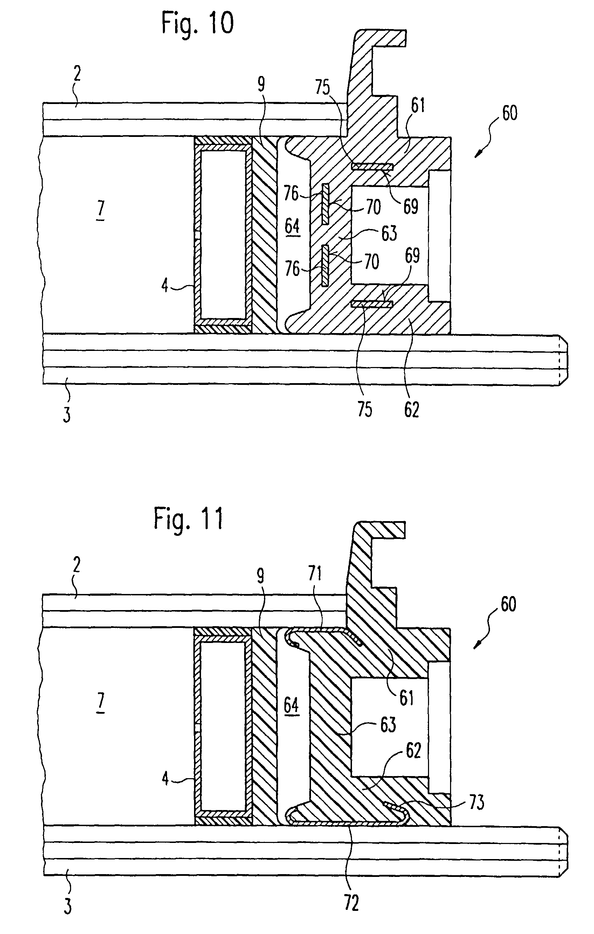

Gemäß der in Fig. 10 dargestellten Ausführungsform weist das Profil 60 in seinen Schenkeln 61, 62 und/oder seinem Querschenkel 63 Kanäle 69 bzw. 70 auf, in die Metallstäbe 75 bzw. 76 einführbar sind oder eingebettet sein können. Diese Kanäle können aber auch zur Aufnahme von Schrauben für die Befestigung der Beschläge verwendet werden, gegebenenfalls zusätzlich und abwechselnd mit solchen Metallstäben 75 bzw. 76.

Bei dem in Fig. 11 dargestellten Ausführungsbeispiel sind an den nach außen weisenden Flächen der Schenkel 61, 62 des Profils 60 Metalleisten 71 bzw. 72 fest angebracht, derart, daß die Glasscheibe 2, 3 zumindest an den Metalleisten 71, 72 zur Anlage kommen.

Die Maßnahme gemäß Fig. 11 kann zusätzlich erreichen, daß die feste Verbindung zwischen dem Profil 60 und den Glasscheiben 2, 3 durch Klebung auch bei starken Temperaturdifferenzen, wie sie in der Praxis vorkommen können, aufrechterhalten bleiben, zumal für die Metalleisten 71, 72 ein Material gewählt werden kann, das als Träger für den Klebstoff besser geeignet ist, als das Material des Profils 60 selbst. Von Vorteil ist insbesondere Aluminium oder eine Aluminiumlegierung.

Die Metalleisten 71, 72 können durch geeignete Maßnahmen bei der Fertigung des Profils 60 mit eingesetzt, insbesondere eingegossen werden. Dies kann beispielsweise durch verankernde Vorsprünge erfolgen, wie zum Beispiel dem Vorsprung 73 der Leiste 72 im Schenkel 62 des Profils 60.

Jedoch können auch andere Vorsprünge hierzu herangezogen werden, etwa über die Längserstreckung der Metalleisten 71, 72 verteilt angeordnete Vorsprünge oder dergleichen.

Schließlich sei erwähnt, daß die Maßnahmen gemäß Fig. 10 und die Maßnahmen gem. Fig. 11 gemeinsam vorgesehen sein können.

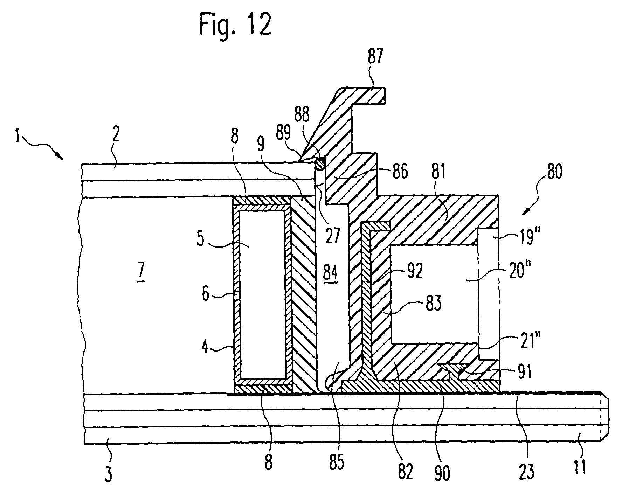

Fig.12 zeigt ebenfalls eine erfindungsgemäße Tür- oder Fensterflügelanordung 1, die nach dem Prinzip einer Isolierverglasung aufgebaut ist. Diese Ausbildung ist sowohl bei einem Profil gemäß Fig. 1 als auch einem Profil gemäß Fig. 8 grundsätzlich anwendbar.

Gemäß Fig.12 ist mit Abstand von der Randverfüllung 9 in den Bereich zwischen den Glasscheiben 2 und 3 jedoch außerhalb der räumlichen Überdeckung ein vom Abstandshalter 4 getrenntes Profil 80 angeordnet, das einen im wesentlichen U-förmigen Querschnitt besitzt und nach außen offen ist und das zur Aufnahme eines Beschlages, insbesondere eines Dreh/Kipp-Beschlages üblicher Bauart, dient. Ferner weist die innenliegende Glasscheibe 3 einen umlaufenden randseitigen Überstand 11 gegenüber der außenliegenden Glasscheibe 2 auf, wobei sich innenliegend und außenliegend auf die Lage der Tür- oder Fensterflügelanordnung 1 im in einem Gebäude eingebauten Zustand bezieht. Das Profil 80 weist im Querschnitt einen außenliegenden Schenkel 81 und einen innenliegenden Schenkel 82 auf, die im wesentlichen parallel zu den Glasscheiben 2 bzw. 3 verlaufen, wobei über die bezüglich des Profils 80 außenliegende Fläche des innenliegenden Schenkels 82 die feste Verbindung zu nur der Glasscheibe 3 erfolgt, vorzugsweise über eine Klebverbindung. Der die Längsschenkel 81, 82 verbindende Querschenkel 83 ist bei dem Ausführungsbeispiel von der Randverfüllmasse 9 derart beabstandet, daß ein Luftraum 84 zwischen der Randverfüllmasse 9 und dem Profil 80 gebildet ist. Der Luftraum 84 kann dabei noch dadurch vergrößert sein, daß der Querschenkel 83 bezüglich der dem Abstandshalter 4 nächstliegenden Abschnitte der Längsschenkel 81 und 82 einen Rücksprung 85 aufweist. In dem Querschenkel 83 können darüberhinaus, hier nicht dargestellte Durchgangsöffnungen vorgesehen sein, über die ein Luftaustausch mit dem Luftraum 84 nach außen möglich ist, wobei diese Durchgangsöffnungen auch zur Aufnahme von Befestigungsschrauben dienen können.

Das Profil 80 ist im Gegensatz zu den bisherigen Ausführungsformen jedoch nicht fest mit der außenliegenden Glasscheibe 2 verbunden, sondern liegt an dieser, insbesondere an deren umlaufenden Stirnseite 27, lediglich abdichtend an. Im dargestellten Ausführungsbeispiel ist der Übergangsbereich zwischen dem außenliegenden Längsschenkel 81 und dem Querschenkel 83 des Profils 80 als Wulst 86 ausgebildet, dessen eine Fläche der Stirnseite 27 der außenliegenden Glasscheibe 2 gegenüberliegt. Vorteilhaft erfolgt die abdichtende Anlage über eine Dichtmasse 88 zwischen dem Wulst 86 und der Stirnseite 27 der außenliegenden Glasscheibe 2.

Der Wulst 86 kann Bestandteil eines nach außen vorspringenden Lappens 87 sein, wie er vorstehend schon erläutert ist, der im eingesetzten Zustand nicht nur als Anschlag für eine gleichmäßige Ausrichtung des Profils 80 gegenüber den Glasscheiben 2 und 3 dienen kann, sondern auch als Mittel dafür, daß durch Witterungseinflüsse eingedrungenes Wasser abgeleitet wird.

Der Lappen 87 kann ferner wie dargestellt eine elastische Lippe 89 aufweisen, die an der Außenseite der außenliegenden Glasscheibe 2 randseitig, also nahe der Stirnseite 27 elastisch anliegt.

Der Raum zwischen den Schenkeln 81, 82, 83 des Profils 80, enthält einen breiteren äußeren Abschnitt 19", der die Abschnitte des Beschlages aufnehmen und zu führen vermag, und einen tieferen Abschnitt 20", der die für Betätigungselemente erforderlichen Vorsprünge des Beschlages größerer Abmessungen aufzunehmen vermag, ohne daß die Bewegung gestört oder beeinträchtigt wäre. Beide Abschnitte 19" und 20" des so gebildeten Raumes sind durch eine Schulter 21" voneinander getrennt.

Durch die gewählte Ausführungsform ist zum einen eine gute Führung des Profils 80 im Bereich zwischen den Glasscheiben 2 und 3 sichergestellt, aber auch eine gute Führung des in dem Profil 80 aufgenommen Beschlages, ohne das unnötige mechanische Belastungen auf den Abstandshalter 4 einerseits und auf den Zusammenhalt zwischen den Glasscheiben 2 und 3 andererseits ausgeübt werden können. Durch das Vorsehen des Luftraumes 84 wird vermieden, daß die Randverfüllmasse 9 aufgrund physikalischer und/oder chemischer Reaktion spröde, und dadurch undicht, wird, wie das weiter oben erläutert ist.

Lediglich schematisch dargestellt ist eine Emaillierung 23, der an der innenliegenden Glasscheibe 3 randseitig umlaufend zum Scheibenzwischenraum 7 weisend vorgesehen ist und deren Breite so bemessen ist, daß Abstandshalter 4 und Profil 80 sowie die dazwischen befindliche Randverfüllung 9 und der Luftraum 84 abgedeckt sind. Der Vorteil einer derartigen Abdeckung wie die Emaillierung 23 ist weiter oben ausführlich dargestellt.

Da das Profil 80 lediglich zur Aufnahme und Führung des Beschlages dient, ist es in einfacher Weise als Kunststoffprofil ausführbar, beispielsweise in einem Strangieß-Verfahren oder Spritzgieß-Verfahren.

Das Profil 80 kann ebenfalls über den Umfang der Flügelanordnung gesehen mehrteilig ausgebildet sein, wie weiter oben erläutert. Es sei erwähnt, daß auch in Fig.12 der handelsübliche Beschlag nicht dargestellt ist.

Es ist ferner zu erwähnen, daß das Profil 80 nicht notwendigerweise ein Kunststoffprofil sein muß, sondern auch aus einem anderen geeigneten Material, beispielsweise Aluminium bestehen kann, wenn dies beim jeweiligen Anwendungsfall zweckmäßig ist, insbesondere für die feste Verbindung mit dem umlaufenden Rand 11 der innenliegenden Glasscheiben 3.

Einen Beitrag zur Verbesserung der Wasserdichtheit nach außen wird durch den Lappen 87 erzielt, der als nach außen vorspringender Vorsprung ausgebildet ist, wobei dieser eine etwa U-förmige Vertiefung aufweisen kann, die in Umfangsrichtung offen ist. Hierdurch wird sowohl die Anlage weiterer Lippen von Lippendichtungen von im Blendrahmen befestigten Dichtungen ermöglicht, als auch ein zusätzliches Hindernis vor witterungsbedingtem Eindringen von Wasser gegeben.

Es sei ferner darauf hingewiesen, daß anstelle der durch die Emaillierung 23 gebildeten Abdeckung auch die Abdeckung verwendet werden kann, wie sie in Fig. 7 ausführlich geschildert ist.

Bei der Herstellung einer erfindungsgemäßen Flügelanordnung 1 gemäß diesem Ausführungsbeispiel kann auf serienmäßig gefertigte Isolierverglasungen zurückgegriffen werden, bei denen eine Glasscheibe, die später als innenliegende Glasscheibe zu verwenden ist, einen randseitigen Überstand 11 aufweist. Zweckmäßig nachdem die Randverfüllung 9 verfestigt ist, wird das Profil 80 im Bereich des Überstandes 11 auf diesem umlaufend aufgesetzt, derart, daß der als Wulst 86 ausgebildete Übergangsbereich zur Anlage gegen die Stirnseite 27 der außenliegenden Glasscheibe 2 kommt, ggfs. unter Zwischenlage der Dichtung 88.

Im Gebrauch kann es nun erhebliche Temperaturschwankungen geben, die dann, wenn die Ausdehnungsdifferenz zwischen insbesondere dem Glas der Glasscheibe 3 einerseits und dem Material des Profils 80 andererseits zu groß ist, zu Schwierigkeiten führen können. Es kann zu Spannungen kommen, die die sichere Handhabung des Beschlages nicht mehr gewährleisten oder durch die der Halt des Profils 80 an der Glasscheibe 3 nicht mehr gewährleistet ist.

Insoweit kann grundsätzlich auf die Maßnahmen zurückgegriffen werden, die in den Figuren 10 und 11 erläutert sind.

Bei dem in Fig.12 dargestellten Ausführungsbeispiel ist an der nach außen weisenden Fläche des innenliegenden Schenkels 82 des Profils 80 eine Metalleiste 90 fest angebracht derart, daß die Glasscheibe 3 über ihren Überstand 11 zumindest an dieser Metalleiste 90 zur Anlage kommt. Diese Maßnahme kann zusätzlich erreichen, daß die feste Verbindung zwischen dem Profil 80 und der Glasscheibe 3 durch Klebung auch bei starken Temperaturdifferenzen, wie sie in der Praxis vorkommen können, aufrechterhalten bleiben, zumal für die Metalleiste 90 ein Material gewählt werden kann, das als Träger für den Klebstoff besser geeignet ist als das Material des Profils 80 selbst. Von Vorteil ist insbesondere Aluminium oder eine Aluminiumlegierung.

Die Metalleiste 90 kann durch geeignete Maßnahmen bei der Fertigung des Profils 80 mit eingesetzt, insbesondere eingegossen, werden. Dies kann insbesondere durch verankernde Vorsprünge erfolgen, wie zum Beispiel den Vorsprung 91 der Metalleiste 90. Ferner kann auch ein Metallstab, wie er weiter oben erläutert ist, zusätzlich in dem Querschenkel 83 vorgesehen sein.

Vorteilhaft ist es jedoch, einen Vorsprung der Metalleiste 90 als diesen Metallstab 90 auszubilden, der darüberhinaus eine Verankerung der Metalleiste 90 im Körper des Profils 80, und zwar auch im Bereich des als Wulst 86 ausgebildete Übergangsbereichs erlaubt, wie das dargestellt ist. Dieser Metallstab 92 kann Durchgangsöffnungen (nicht dargestellt) aufweisen, um zum einen den Luftaustausch mit dem Luftraum 84 zu ermöglichen, wobei zum anderen auch Schrauben aufgenommen werden können, falls dies erforderlich ist.

Beim Ausführungsbeispiel ist dargestellt, daß die außenliegende Seite des außenliegenden Längsschenkels 81 etwa mit der innenliegenden Fläche der außenliegenden Glasscheibe 2 fluchtet. Dies hat gewisse Vorteile im Zusammenhang mit dem Zusammenwirken mit im Blendrahmen angeordneten Lippendichtungen. Wesentlich ist jedoch, daß auch der außenliegende Längsschenkel 81 ausreichend stabil ist, damit bei der Aufnahme des Beschlages keine Probleme entstehen.

Es ist noch zu erwähnen, daß die bereits im Zusammenhang mit Isolierverglasungen bekannten Maßnahmen zur Erweckung des Eindruckes eines Sprossenfensters oder einer Butzenscheibe in gleicher Weise angewandt werden können, wobei zusätzlich auch auf die anmeldungsgemäße Maßnahme der Emaillierung auch für diesen Zweck zurückgegriffen werden kann.

Insgesamt wird somit eine rahmenlose Tür- bzw. Fensterflügelanordnung geschaffen, die die für praktische Anwendungen unbedingt erforderliche Dichtheit des Scheibenzwischenraumes 7 gewährleisten kann, wobei darüberhinaus eine große Vielfalt ästhetischer und architektonischer Wirkungen erzielt werden können und ferner die sichere störungsfreie Handhabung der Beschläge gewährleistet werden kann.

## Patentansprüche

1. Rahmenlose Tür- oder Fensterflügelanordnung mit Isolierverglasung, bestehend aus
einer außenliegenden Glasscheibe (2),
einer innenliegenden Glasscheibe (3) mit gegenüber der außenliegenden Glasscheibe (2) umlaufendem randseitigen Überstand (11),
einem Abstandshalter (4), der etwa randseitig zwischen innenliegender und außenliegender Glasscheibe (2, 3) gasdicht eingesetzt ist, und
einer ebenfalls randseitigen den Abstandshalter umgebenden etwa U-förmigen nach außen offenen Anordnung zwischen den Glasscheiben (2, 3) zur Aufnahme eines Beschlags, wobei Betätigungsglieder die innenliegende Glasscheibe (3) über Öffnungen durchsetzen und den Zugang zum Beschlag ermöglichen,
**dadurch gekennzeichnet,**
daß die Anordnung als ein vom Abstandshalter (4) getrenntes Profil (10) ausgebildet ist, das in eine bei Isolierverglasungen an sich bekannte elastische Randverfüllung (9) eingebettet ist.

2. Tür- oder Fensterflügelanordnung nach Anspruch 1,
**dadurch gekennzeichnet**,
daß das Profil (10) sich an den Glasscheiben (2, 3) jeweils lediglich linienartig abstützend ausgebildet ist.

3. Tür- oder Fensterflügelanordnung nach Anspruch 2,
**dadurch gekennzeichnet**,
daß das Profil (10) sich an dem vom Scheibenzwischenraum (7) entferntem Ende seiner Schenkel (12, 13) abstützt.

4. Rahmenlose Tür- oder Fensterflügelanordnung mit Isolierverglasung, bestehend aus
einer außenliegenden Glasscheibe (2),
einer innenliegenden Glasscheibe (3) mit gegenüber der außenliegenden Glasscheibe (2) umlaufendem randseitigen Überstand (11),
einem Abstandshalter (4), der etwa randseitig zwischen innenliegender und außenliegender Glasscheibe (2, 3) gasdicht eingesetzt ist, und
einer ebenfalls randseitigen den Abstandshalter umgebenden etwa U-förmigen nach außen offenen Anordnung zwischen den Glasscheiben (2, 3) zur Aufnahme eines Beschlags, wobei Betätigungsglieder die innenliegende Glasscheibe (3) über Öffnungen durchsetzen und den Zugang zum Beschlag ermöglichen,
**dadurch gekennzeichnet**,
daß die Anordnung als ein vom Abstandshalter (4) getrenntes Profil (60; 80) ausgebildet ist, das so mit Abstand von dem Abstandshalter (4) zwischen den Glasscheiben (2, 3) angeordnet ist, insbesondere eingeklebt ist, daß zwischen dem Profil (60; 80) und einer bei Isolierverglasungen an sich bekannten elastischen Randverfüllung (9) ein Luftraum (64; 84) verbleibt.

5. Tür- oder Fensterflügelanordnung nach Anspruch 4,
**dadurch gekennzeichnet**,
daß das Profil (60) in seinem Querschenkel (63) Durchgangsöffnungen (74) aufweist.

6. Tür- oder Fensterflügelanordnung nach Anspruch 4 oder 5,
**dadurch gekennzeichnet**,
daß das Profil (60; 80) in seinem Querschenkel (63; 83) einen Rücksprung (65; 85) bezüglich der dem Abstandshalter (4) nächstliegenden Abschnitte der Schenkel (61, 62; 81, 82) aufweist.

7. Tür- oder Fensterflügelanordnung nach einem der Ansprüche 1 bis 6,
**dadurch gekennzeichnet**,
daß das Profil (10; 60; 80) ein Kunststoffprofil ist.

8. Tür- oder Fensterflügelanordnung nach einem der Ansprüche 1 bis 7,
**dadurch gekennzeichnet**,
daß das Profil (10; 60; 80) am entfernten Ende des der außenliegenden Glasscheibe (2) zugeordneten Schenkels (12; 61; 81) einen nach außen vorspringenden Lappen (66; 87) aufweist, der im eingesetzten Zustand des Profils (10; 60; 80) an der Stirnfläche der außenliegenden Glasscheibe (2) anliegt.

9. Tür- oder Fensterflügelanordnung nach einem der Ansprüche 1 bis 8,
**dadurch gekennzeichnet**,
daß die Tiefe des Profils (10; 60; 80) so bemessen ist, daß die zum Scheibenzwischenraum (7) weisenden vorspringenden Teile des Beschlags berührungsfrei aufnehmbar sind.

10. Tür- oder Fensterflügelanordnung nach einem der Ansprüche 1 bis 9,
**dadurch gekennzeichnet**,
daß der Überstand (11) zwischen außenliegender und innenliegender Glasscheibe (2, 3) so bemessen ist, daß die im in eine Tür- bzw. Fensteranordnung eingesetzten Zustand zu deren Blendrahmen vorspringenden Teile des Beschlags störungsfrei aufnehmbar sind, deren bestimmungsgemäßen Eingriff in blendrahmenseitige Beschlag-Elemente jedoch gewährleistet ist.

11. Tür- oder Fensterflügelanordnung nach einem der Ansprüche 1 bis 3 oder 7 bis 10,
**dadurch gekennzeichnet**,
daß das Profil (10) über den Umfng der Tür- oder Fensterflügelanordnung mehrteilig (10a, 10b) ausgebildet ist, wobei die Trennstellen (26) so gelegt und bemessen sind, daß beim Einbetten etwa einquellende Randverfüllungsmasse den Beschlag und dessen Betätigung nicht beeinträchtigt.

12. Tür- oder Fensterflügelanordnung nach einem der Ansprüche 4 bis 10,
**dadurch gekennzeichnet**,
daß das Profil (60) über den Umfang der Tür- oder Fensterflügelanordnung mehrteilig (60a, 60b) ausgebildet ist, wobei die Trennstellen (26') den Luftaustausch mit dem Luftraum (64) ermöglichen, jedoch so bemessen sind, daß die Betätigung des Beschlags nicht beeinträchtigt ist.

13. Tür- oder Fensterflügelanordnung nach Anspruch 11 oder 12,
**gekennzeichnet durch** eine zweitteilige etwa C-förmige Ausbildung.

14. Tür- oder Fensterflügelanordnung nach einem der Ansprüche 1 bis 13,
**dadurch gekennzeichnet**,
daß der Abstandshalter (4) über einen Silikon- oder Butylstreifen (8) eingesetzt ist und die Randverfüllung (9) aus Thiokol besteht.

15. Tür- oder Fensterflügelanordnung nach einem der Ansprüche 1 bis 14,
**dadurch gekennzeichnet**,
daß zumindest die innenliegende Glasscheibe (3) eine randseitige Abdeckung des Bereichs aufweist, der den Abstandshalter (4) und das Profil (10; 60; 80) umfaßt.

16. Tür- oder Fensterflügelanordnung nach Anspruch 15,
**gekennzeichnet durch**
eine Verbundglasscheibe (50), bei der eine im wesentlichen undurchsichtige Zwischenschicht (54) die randseitige Abdeckung erreicht.

17. Tür- oder Fensterflügelanordnung nach Anspruch 15,
**gekennzeichnet durch**
eine Einscheibensicherheitsglas-Scheibe, bei der die randseitige Abdeckung durch eine Glasbehandlung erreicht ist, die einen Haftgrund für das gasdichte Einsetzen des Abstandshalters (4) gewährleistet, den entsprechenden Bereich jedoch im wesentlichen undurchsichtig macht.

18. Tür- oder Fensterflügelanordnung nach Anspruch 17,
**gekennzeichnet durch**
eine Emaillierung (23).

19. Tür- oder Fensterflügelanordnung nach Anspruch 18,
**dadurch gekennzeichnet**,
daß die Öffnungen für die Betätigungsglieder Bohrungen (24, 25) im Bereich der Emaillierung (23) sind.

20. Tür- oder Fensterflügelanordnung nach einem der Ansprüche 1 bis 19
**dadurch gekennzeichnet,**
daß im in eine Tür- oder Fensteranordnung eingesetzten Zustand ein außenseitiges im wesentliches flächiges Abdeckteil (35) des Blendrahmens (30) der Tür- oder Fensteranordnung den Bereich der außenliegenden Glasscheibe überdeckt, der dem Abstandshalter (4) und dem Profil (10; 60; 80) zugeordnet ist.

21. Tür- oder Fensterflügelanordnung nach Anspruch 20,
daß das im wesentliche flächige Abdeckteil (35) des Blendrahmens (30) randseitig eine umlaufende Lippendichtung (36, 45) trägt, die im in die Tür- bzw. Fensteranordnung eingesetzten und geschlossenen Zustand zur abdichtenden Anlage an die außenliegende Glasscheibe (2) kommt.

22. Tür- oder Fensterflügelanordnung nach Anspruch 21,
**dadurch gekennzeichnet**,
daß der Blendrahmen (30) oder dessen Abdeckteil (35, 48) eine weitere umlaufende Lippendichtung (36, 40, 46) trägt, die im in die Tür- bzw. Fensteranordnung eingesetzten und geschlossenen Zustand am äußeren Rand der außenliegenden Glasscheibe (2) und/oder einem entsprechenden Abschnitt (38) des Profils (10; 60; 80) zur abdichtenden Anlage kommt.

23. Tür- oder Fensterflügelanordnung nach Anspruch 22,
**dadurch gekennzeichnet**,
daß zwischen den beiden Lippendichtungen (36, 37, 36, 40) im Bereich des Abdeckteils (35) ein Hohlraum (39) zur Aufnahme und zum Abführen etwa eingedrungenen Wassers ausgebildet ist.

24. Tür- oder Fensterflügelanordnung nach einem der Ansprüche 8 bis 23, soweit auf Anspruch 8 zurückbezogen,
**dadurch gekennzeichnet**,
daß der Lappen (66) einen über die Außenseite der Glasscheibe (2) vorspringenden Vorsprung (67, 87) mit einer etwa U-förmigen Vertiefung (60) aufweist, die in Umfangsrichtung offen ist.

25. Rahmenlose Tür- oder Fensterflügelanordnung nach einem der Ansprüche 1 bis 24,
**dadurch gekennzeichnet**,
daß das Profil (80) über seinen innenliegend positionierten Längsschenkel (82) mit der innenliegenden Glasscheibe (3) fest verbunden, insbesondere verklebt, ist und im Übergangsbereich (86) zwischen Querschenkel (83) und außenliegend positioniertem Längsschenkel (81) an der umlaufenden Stirnseite (27) der außenliegenden Glasscheibe (2) abdichtend anliegt.

26. Tür- oder Fensterflügelanordnung nach Anspruch 25,
**gekennzeichnet durch**
eine elastische Dichtmasse (88) zwischen dem Übergangsbereich (86) des Profils (80) und der Stirnseite (27) der außenliegenden Glasscheibe (2).

27. Tür- oder Fensterflügelanordnung nach Anspruch 25 oder 26,
**dadurch gekennzeichnet**,
daß der Übergangsbereich des Profils (80) als nach außen vorspringende Wulst (86) ausgebildet ist und die Außenseite des außenliegenden Längsschenkels (81) im übrigen etwa mit der Innenseite der außenliegenden Glasscheibe (2) fluchtet.

28. Tür- oder Fensterflügelanordnung nach Anspruch 27, bei Rückbeziehung auf Anspruch 8,
**dadurch gekennzeichnet**,
daß der Lappen (87) von dem den Übergangsbereich des Profils (80) bildenden Wulst (86) vorspringt.

29. Tür- oder Fensterflügelanordnung nach einem der Ansprüche 25 bis 28,
**dadurch gekennzeichnet**,
daß der Übergangsbereich des Profils (80) eine elastische Lippe (89) aufweist, die an der Außenseite der außenliegenden Glasscheibe (2) randseitig anliegt.

30. Rahmenlose Tür- oder Fensterflügelanordnung nach einem der Ansprüche 1 bis 29,
**dadurch gekennzeichnet**,
daß das Profil (10; 60; 80) in seinen Schenkeln (61, 62) und/oder seinem Querschenkel (63) Kanäle (69, 70) aufweist, in die Metallstäbe (75, 76; 92) einführbar oder eingebettet sind, wobei gegebenenfalls zumindest einige der Kanäle (69, 70) abschnittsweise Schrauben aufnehmen können.

31. Rahmenlose Tür- oder Fensterflügelanordnung nach einem der Ansprüche 1 bis 30,
**dadurch gekennzeichnet**,
daß an den nach außen weisenden Flächen der Schenkel (61, 62; 81, 82) des Profils (60; 80) Metalleisten (71, 72; 90) fest angebracht sind, derart, daß die Glasscheiben (2, 3) zumindest an den Metalleisten (71, 72; 90) anliegen, zumindest jedoch an der nach außen weisenden Fläche des innenliegenden Schenkels (82).

32. Tür- oder Fensterflügelanordnung nach Anspruch 31,
**dadurch gekennzeichnet**,
daß die Metalleisten (71, 72; 90) in das Material des Profils (60; 80) eingegossen sind.

33. Tür- oder Fensterflügelanordnung nach Anspruch 31 oder 32,
**dadurch gekennzeichnet**,
daß die zu den Glasscheiben (2, 3) weisenden Flächen der Metalleisten (71, 72; 90) Träger eines Klebmittels sind.

34. Tür- oder Fensterflügelanordnung nach einem der Ansprüche 31 bis 33,
**dadurch gekennzeichnet**,
daß die Metalleisten (71, 72; 90)) aus Aluminium oder einer Aluminiumlegierung bestehen.

35. Tür- oder Fensterflügelanordnung nach den Ansprüchen 30 und 31 oder einem der Ansprüche 32 bis 34 bei Rückbeziehung auf die Ansprüche 30 und 31,
**dadurch gekennzeichnet**,
daß der Metallstab (92) mit der Metalleiste (90) einstückig ausgebildet ist.

36. Verfahren zur Herstellung einer rahmenlosen Tür- oder Fensterflügelanordnung mit Isolierverglasung nach einem der Ansprüche 1 bis 3 und 7 bis 35 bei Rückbeziehung auf die Ansprüche 1 bis 3 mit folgenden Schritten:
- Zuschneiden einer Floatglasscheibe für die außenliegende Glasscheibe (2),
- Zuschneiden einer Floatglasscheibe für die innenliegende Glasscheibe (3),
- Bohren von Öffnungen (24, 25) für Betätigungsglieder eines Beschlages in dem Randbereich der Floatglasscheibe für die innenliegende Glasscheibe (3),
- Emaillieren des Randbereiches zumindest der Floatglasscheibe für die innenliegende Glasscheibe (3),
- Wärmebehandeln zumindest der Floatglasscheibe für die innenliegende Glasscheibe (3) zum Einbrennen der Emaillierung (23),
- gleichzeitiges oder getrenntes Wärmebehandeln zumindest der Floatglasscheibe für die innenliegende Glasscheibe (3) zum Formen einer Einscheibensicherheitsglas-Scheibe,
- ggfs. Beschichten mindestens einer der Glasscheiben (2, 3) mit einer Wärme-Schall- und/oder Strahlungsschutzschicht,
- Zuordnen, Einsetzen und Zusammenfügen und Verkleben der beiden Glasscheiben (2, 3) und eines Abstandhalters (4) in für Isolierverglasungen üblicher Weise,
- Einfüllen einer Randverfüllungsmasse in für Isolierverglasungen üblicher Weise,
- Eindrücken des U-förmigen Profils (10) in die Randverfüllungsmasse ggfs. bis zur Anlage eines bei dem Profil (10) am entfernten Ende des der außenliegenden Glasscheibe (3) zugeordneten Schenkels (12) nach außen vorspringenden Lappens (22) an die Stirnseite der außenliegenden Glasscheibe (3),
- Aushärtenlassen der Randverfüllungsmasse bis sie ihren elastischen Endzustand erreicht hat, und
- Einsetzen und Montieren des Beschlags und dessen Betätigungsglieder.

## Claims

1. Frameless door or window casement arrangement with insulated glazing, consisting of an externally located glass plate (2), an inwardly located glass plate (3) with an encompassing edge projection (11) opposite the externally located glass plate (2), a spacer (4) which is gas-tightly inserted along generally the edge between the inwardly located and externally located glass plate 2 (2,3,) and a similarly generally U-shaped outwardly opening arrangement which along the edge encompasses the spacer and is arranged between the glass places (2,3,) for receipt of a fitting, whereby actuating elements pass through the inwardly located glass plate 3 through openings and facilitate access to the fitting, characterised in that the arrangement is formed by a profile (10) separated from the spacer (4) which is embedded into a known per se elastic edge filling (9) for insulated glazings.

2. A door or window casement arrangement according to Claim 1, characterized that the profile (10) is formed to linearly support itself on the glass plates (2,3).

3. A door or window casement arrangement according to Claim 2, characterized in that the profile (10) includes arms (12,13) supporting themselves at the end which is distent from the plate interspace (7).

4. A frameless door or window casement arrangement with insulated glazing, consisting of an externally located glass plate (2), an inwardly located glass place (3) with a peripheral edge projection (11) opposite the externally located glass plate (2), a spacer (4) which is gas-tightly inserted to extend generally along the edge between the inwardly located and externally located glass (2,3), and a similarly generally U-shaped outwardly opening arrangement encompassing the spacer being located between the glass plates (2,3) for the receipt of a fitting, whereby actuating elements of the inwardly located glass plate (3) pass through openings and facilitate access to the fitting, characterized in that the arrangement is formed by a profile (60; 80) separate from the spacer (4), and is arranged at such a distance from the spacer (4) between the glass plates (2,3), and is in particular glued therein, so that between the profiles (60; 80) and an elastic edge filling (9) known per se for insulated glazing, there remains an airs pace (64; 84).

5. A door or window casement arrangement according to Claim 4, characterized in that the profile (60) possesses through-openings (74) in a transverse arm (63).

6. A door or window casement arrangement according to Claim 4 or 5, characterized at the profile 60, 8 includes a setback 65, 85 in its transverse arms 63, 83 relative to the section of the arms 61, 62, 81, 82 closest to the spacer 4.

7. A door or window casement arrangement according to one of Claims 1 through 6, characterized that the profile (10; 60; 80) is a plastic material profile.

8. A door or window casement arrangement according to one of Claims 1 through 7, characterized in that the profile (10; 60; 80) on the distant end of the arms (12; 61; 62) associated with the externally locating glass plate (2) possesses an outwardly projecting flange (66; 87) which in the inserted condition of the profile (10; 60; 80) lies against the end surface of the externally located glass plate (2).

9. A door or window casement arrangement according to one of Claims 1 through 8, characterized in that the depth of the profile (10; 60; 80) is dimensioned so that the projecting part of the fitting which faces towards the plate interspace (7) is received in a contactless manner.

10. A door or window casement arrangement according to one of claims 1 through 9, characterized that the projection (11) between the externally located and inwardly located glass plates (2,3) is dimensioned that in the condition in which it is inserted into a door or window arrangement, the part of the fitting which projects towards the mating frame thereof is undisruptedly receivable, however, facilitates the specified engagement into fitting elements in the mating frame.

11. A door or window casement arrangement according to one of Claims 1 through 3 or 7 through 10, characterized in that the profile (10) is constructed in multiple parts around the circumference of the door or window casement arrangement (10a; 10b), whereby the separating locations (26) are positioned and dimensioned such that upon embedding any enflowing edge filling mass will not influence the fitting and the actuation thereof.

12. A door or window casement arrangement according to one of Claims 4 through 10, characterized in that the profile (60) is constructed in a multiple parts (60a; 60b) along the circumference of the door or window casement arrangement, whereby the separating location (26') facilitate an air exchange with the air space (64), but are so dimensioned so as not to influence the actuation of the fitting.

13. A door or window casement arrangement according to Claims 11 or 12, characterized through a two-part generally C-shaped configuration.

14. A door or window casement arrangement according to one of Claims 1 through 13, characterized in that the spacer (4) is inserted by means of a silicon or butyl strip (8) and the edge filling 9 consists of Thiokol.

15. A door or window casement arrangement according to one of Claims 1 through 14, characterized in that at least the inwardly located glass place (3) possesses an edge covering in a region which encompasses the spacer (4) and the profile (10; 60; 80).

16. A door or window casement arrangement according to Claim 15, characterized by a laminated glass plate (50) which has an essentially opaque intermediate layer (54) forming the edge covering.

17. A door or window casement arrangement according to Claim 15, characterized by a single-plate safety glass plate, wherein the edge covering is found through a glass treatment, which affords an adhesive base for the gas-tight insertion of the spacer (4); however which renders the applicable region essentially opaque.

18. A door or window casement arrangement according to Claim 17, characterized by an enameling (23).

19. A door or window casement arrangement according to Claim 18, characterized in that the openings for the actuating elements comprises bores (24,25) in the region of the enameling (23).

20. A door or window casement arrangement according to one of Claims 1 through 19, characterized in the condition of being inserted into a door or window arrangement, an outside essentially flat covering part (35) of the mating frame (30) of the door or window arrangement covers the region of the externally located glass plate which has the spacer (4) and the profile (10; 60; 80) associated therewith.

21. A door or window casement arrangement according to Claim 20, characterised in that the essentially flat covering portion (35) of the mating frame (30) carries an encompassing lip seal (36,45) wherein it is inserted and in the closed door or window arrangement condition, comes into sealing contact with the externally located glass plate (2).

22. A door or window casement arrangement according to Claim 21, characterized in that the mating frame (30) or the covering portion thereof (35,48) thereof carries a further encompassing lip seal (36,40, 46) which in the inserted end closed condition in the door or window arrangement, comes into sealing contact at the outer edge of the externally located glass plate (2) and/or an applicable portion (38) the profile (10; 60; 80).

23. A door or window casement arrangement according to Claim 22, characterized in that between the two lip seals (36,37; 36,40) in the region of the covering portion (35) there is formed a hollow space (39) for the receipt and for the conducting off of any penetrated water.

24. A door or window casement arrangement according to one of Claims 3 through 23, referring to claim 3, characterized in that the flange 26 possesses a projecting protrusion (67,68) beyond the outside of the glass plate (2) with a generally U-shaped recess (60) which is open in the circumferential direction.

25. Frameless door or window casement arrangement according to one of Claims 1 through 24, characterized that the profile (80) is fixedly connected with the inwardly located glass plate (3) through its inwardly located positioned longitudinal arm (82), in particular being glued thereto, and in the transitional region (86) between the transverse arm (83) and the outwardly located positioned longitudinal arm (81) sealing contacts against the encompassing end surface (27) of the externally located glass plate (2).

26. A door or window casement arrangement according to claim 25, characterized by an elastic sealing mass (88) between the transitional region (86) of the profile (80) and the end surface (27) of the externally located glass plate (2).

27. A door or window casement arrangement according co Claim 25 or 26, characterized that the transitional region of the profile (80) is formed as an outwardly projecting bead (86), and the outside of the outwardly located longitudinal arm (81) for the remainder is generally is in alignment with the inner side of the externally located glass plate (2).

28. A door or window casement arrangement according to Claim 27, referring to claim 8, characterized in that the flange (87) projects beyond the transitional region of the bead (86) profile (80).

29. A door or window casement arrangement according to one of Claims 25 through 28, characterized in that the traditional region of the profile (80) possesses an elastic lip (89) which contacts along the edge of the outside of the externally located glass plate (2).

30. A frameless door or window casement arrangement according to one of Claims 1 through 29, characterized in that the profile (10; 60; 80) possesses channels (69,70) in the arms (61,62) and/or the transverse arm (63), in which there are introduceable or embedded metal rods (75; 76; 92) whereby at least a few of the channels (69, 70) cam receive screws in portions thereof.

31. A frameless door or window casement arrangement according to one of Claims 1 through 30, characterized in that on the outwardly facing surfaces of the arms (61,62; 81,82) of profiles (60; 80) there are fixedly attached metal strips (71; 72; 90) so that the glass plates (2,3) at least contact against the metal strips (71,72; 90;) however, at least against the outwardly facing surface of the inwardly located arm (82).

32. A door or window casement arrangement according to Claim 31, characterized that the metal strips (71,72; 90) are molded into the material of the profile (60; 80).

33. A door or window casement arrangement according to Claim 31 or 32, characterized in that the surfaces of the metal strips (71,72; 90) which face towards the glass plates (2,3) are the support for an adhesive medium.

34. A door or window casement arrangement according to one of Claims 31 through 33, characterized in that the metal strips (71,72; 90) are constituted of aluminum or an aluminum alloy.

35. A door or window casement arrangement according to Claims 30 and 31 or one of Claims 32 through 34, with reference to Claims 30 and 31, characterized in that the metal rod (92) is integrally constructed with the metal strip (90).

36. A method for the manufacture of a frameless door or window casement arrangement with insulated glazing according to one of Claims 1 through 3, and 7 through 35, with reference to Claims 1 through 3, with the following steps:
Cutting a float glass plate for the externally located glass plate (2), cutting a float-glass plate for the inwardly located glass plate (3), boring openings (24,25) for the actuating elements of a fitting in an edge region of the float glass-plate for the inwardly located glass plate (3), enameling the edge region of at least the float-glass plate for the inwardly located glass plate (3), heat treating at least the float glass plate for the inwardly located glass plate (3) for the burning in of the enameling (23), effecting a concurrent or separate heat treatment of the at least the float-glass plate for the inwardly located glass plate (3) to form a single-plate safety glass plate, when required coacing at least one of the glass plates (2,3) with a heat, sound, and/or radiation protective layer, associating, inserting and assembling and glueing of the two glass plates (2,3,) and a spacer (4) for the insulated glazing in a usual manner, filling in of an edge filling mass for the insulated glazing in a usual manner, pressing the U-shaped profile (10) into the edge filling mass up to contact with an end of an arm (12) context of an end remote from the profile (10) of the outwardly located glass plate (3) towards the outwardly projecting flange (22) at the end surface of the externally located glass plate (3), curing the edge filling mass until reaching of the elastic end condition thereof, and inserting and mounting the fitting and the actuation elements thereof.

## Revendications

1. Dispositif à battant de porte ou de croisée sans cadre avec vitrage isolant constitué d'une vitre extérieure (2), d'une vitre intérieure (3) avec bord périphérique (11) dépassant par rapport à la vitre extérieure (2), d'un écarteur (4) qui est inséré, de manière étanche aux gaz, à peu près sur le bord entre la vitre intérieure (3) et la vitre extérieure (2), et d'un dispositif à peu près en U, ouvert vers l'extérieur, qui entoure l'écarteur et qui est disposé également sur le bord, entre les vitres (2, 3), pour recevoir une armature, l'organe d'actionnement traversant la vitre intérieure (3) à travers des ouvertures et permettant l'accès à l'armature, caractérisé en ce que le dispositif est réalisé sous la forme d'un profilé (10) qui est séparé de l'écarteur (4) et noyé dans un garnissage de bordure (9) élastique, connu en soi pour les vitrages isolants.

2. Dispositif à battant de porte ou de croisée selon la revendication 1, caractérisé en ce que le profilé (10) est réalisé de manière à s'appuyer contre chacune des vitres (2, 3), uniquement de manière linéaire.

3. Dispositif à battant de porte ou de croisée selon la revendication 2, caractérisé en ce que le profilé (10) prend appui contre l'extrémité de ses ailes (12, 13) éloignée de l'interstice (7) entre les vitres.

4. Dispositif à battant de porte ou de croisée sans cadre avec vitrage isolant constitué d'une vitre extérieure (2), d'une vitre intérieure (3) avec bord périphérique (11) dépassant par rapport à la vitre extérieure (2), d'un écarteur (4) qui est inséré de manière étanche aux gaz à peu près sur le bord entre la vitre intérieure (3) et la vitre extérieure (2), et d'un dispositif à peu près en U, ouvert vers l'extérieur qui entoure l'écarteur et qui est disposé également sur le bord, entre les vitres (2, 3), pour recevoir une armature, l'organe d'actionnement traversant la vitre intérieure (3) à travers des ouvertures et permettant l'accès à l'armature, caractérisé en ce que le dispositif est réalisé sous la forme d'un profilé (60 ; 80) qui est séparé de l'écarteur (4) et qui est disposé, notamment collé, à distance de l'écarteur (4), entre les vitres (2, 3), de manière qu'entre le profilé (60 ; 80) et un garnissage de bord (9) élastique connu en soi pour les vitrages isolants, il reste une chambre à air (64 ; 84).

5. Dispositif à battant de porte ou de croisée selon la revendication 4, caractérisé en ce que l'aile transversale (63) du profilé (60) présente des ouvertures de passage (74).

6. Dispositif à battant de porte ou de croisée selon la revendication 4 ou 5, caractérisé en ce que la branche transversale (63 ; 83) du profilé (60 ; 80) présente un retrait (65 ; 85) par rapport aux segments, les plus proches de l'écarteur (4), des ailes (61, 62 ; 81, 82).

7. Dispositif à battant de porte ou de croisée selon l'une des revendications 1 à 6, caractérisé en ce que le profilé (10 ; 60 ; 80) est un profilé en matière plastique.

8. Dispositif à battant de porte ou de croisée selon l'une des revendications 1 à 7, caractérisé en ce que le profilé (10 ; 80 ; 80) présente, à l'extrémité éloignée de l'aile (12 ; 61 ; 81), associée à la vitre extérieure (2), une patte (66 ; 87) faisant saillie vers l'extérieur qui s'applique contre la face frontale de la vitre extérieure (2), lorsque le profilé (10 ; 60 ; 80) est mis en place.

9. Dispositif à battant de porte ou de croisée selon l'une des revendications 1 à 8, caractérisé en ce que la profondeur du profilé (10 ; 60 : 80) est telle que les parties saillantes de l'armature et qui sont dirigées vers l'interstice (7) entre les vitres peuvent être logées sans contact.

10. Dispositif à battant de porte ou de croisée selon l'une des revendications 1 à 9, caractérisé en ce que le bord dépassant (11) entre la vitre extérieure (2) et la vitre intérieure (3) a une dimension telle que lorsque l'armature est mise en place dans un Dispositif à battant de porte ou de croisée, ses parties qui font saillie vers la traverse dormante peuvent être logées sans gêne tandis que leur engagement correct dans des éléments côté traverse dormante de l'armature est garanti.

11. Dispositif à battant de porte ou de croisée selon l'une des revendications 1 à 3 ou 7 à 10, caractérisé en ce que le profilé (10) est réalisé en plusieurs parties (10a, 10b) sur le pourtour du dispositif à battant de porte ou de croisée, les points de séparation (26) étant disposés et dimensionnés de manière que la pâte de garnissage du bord, qui éventuellement gonfle à l'intérieur au moment de l'enrobage, n'endommage par l'armature ni son actionnement.

12. Dispositif à battant de porte ou de croisée selon l'une des revendications 4 à 10, caractérisé en ce que le profilé (60) est réalisé en plusieurs parties (60a, 60b) sur le pourtour du dispositif à battant de porte ou de croisée, les points de séparation (26') permettant un échange d'air avec la chambre à air (64), mais étant dimensionnés de manière à ne pas gêner l'actionnement de l'armature.

13. Dispositif à battant de porte ou de croisée selon la revendication 11 ou 12, caractérisé par une réalisation en deux parties à peu près en forme de C.

14. Dispositif à battant de porte ou de croisée selon l'une des revendications 1 à 13, caractérisé en ce que l'écarteur (4) est mis en place au moyen d'une bande de silicone ou de butyle (8) et le garnissage de bord (9) est en thiocol.

15. Dispositif à battant de porte ou de croisée selon l'une des revendications 1 à 14, caractérisé en ce qu'au moins la vitre intérieure (3) présente un recouvrement côté bordure de la zone qui comprend l'écarteur (4) et le profilé (10 ; 60 ; 80).

16. Dispositif à battant de porte ou de croisée selon la revendication 15, caractérisé par une vitre composite (5) dans laquelle une couche intermédiaire (54) sensiblement non transparente atteint le recouvrement côté bordure.

17. Dispositif à battant de porte ou de croisée selon la revendication 15, caractérisé par une vitre en verre de sécurité trempé dans laquelle le recouvrement de bordure est obtenu par un traitement du verre qui garantit un fond adhésif pour la mise en place, de manière étanche aux gaz, de l'écarteur (4), mais rend sensiblement non transparente la zone correspondante.

18. Dispositif à battant de porte ou de croisée selon la revendication 17, caractérisé par un émaillage (23).

19. Dispositif à battant de porte ou de croisée selon la revendication 18, caractérisé en ce que les ouvertures pour les organes d'actionnement sont des trous (24, 25) pratiqués dans la zone de l'émaillage (23).

20. Dispositif à battant de porte ou de croisée selon l'une des revendications 1 à 19, caractérisé en ce que lorsqu'il est inséré dans un Dispositif à battant de porte ou de croisée, un élément de recouvrement (35) extérieur, sensiblement plat, de la traverse dormante (30) du dispositif à battant de porte ou de croisée, recouvre la zone de la vitre extérieure qui est associée à l'écarteur (4) et au profilé (10 ; 60 ; 80).

21. Dispositif à battant de porte ou de croisée selon la revendication 20, caractérisé en ce que l'élément de recouvrement (35), sensiblement plat, de la traverse dormante (30), porte sur son bord une lèvre d'étanchéité (36, 45) périphérique qui, lorsqu'elle est mise en place dans le dispositif à battant de porte ou de croisée et fermée, vient s'appliquer contre la vitre extérieure (2) de manière à assurer l'étanchéité.

22. Dispositif à battant de porte ou de croisée selon la revendication 21, caractérisé en ce que la traverse dormante (30) ou son élément de recouvrement (35, 48) porte une lèvre d'étanchéité (36, 40, 46) périphérique qui, lorsqu'elle est mise en place dans le dispositif à battant de porte ou de croisée et fermée, vient s'appliquer contre le bord extérieur de la vitre extérieure (2) et/ou contre un segment (38) correspondant du profilé (10 ; 60 ; 80) pour assurer l'étanchéité.

23. Dispositif à battant de porte ou de croisée selon la revendication 22, caractérisé en ce qu'une cavité (39) destinée à recevoir et à évacuer l'eau ayant éventuellement pénétré à l'intérieur, est réalisée entre les deux lèvres d'étanchéité (36, 37, 36, 40), dans la zone de l'élément de recouvrement (35).

24. Dispositif à battant de porte ou de croisée selon l'une des revendications 8 à 23, dans la mesure où elles se rapportent à la revendication 8, caractérisé en ce que la patte (66) présente une saillie (67, 87) qui dépasse vers la face extérieure de la vitre (2), avec un renfoncement (60) à peu près en U qui est ouvert dans la direction périphérique.

25. Dispositif à battant de porte ou de croisée sans cadre, selon l'une des revendications 1 à 24, caractérisé en ce que le profilé (80) est assemblé fixement, notamment collé, avec la vitre intérieure (3), par ses ailes longitudinales (82) positionnées à l'intérieur, et s'applique de manière à assurer l'étanchéité dans la zone de transition (86) entre les ailes transversales (83) et les ailes longitudinales (81) positionnées à l'extérieur, contre la face frontale (27) périphérique de la vitre extérieure (2).

26. Dispositif à battant de porte ou de croisée selon la revendication 25, caractérisé par une pâte d'étanchéité (88) élastique entre la zone de transition (86) du profilé (80) et la face frontale (27) de la vitre extérieure (2).

27. Dispositif à battant de porte ou de croisée selon la revendication 25 ou 26, caractérisé en ce que la zone de transition du profilé (80) est réalisée sous la forme d'un bourrelet (86) faisant saillie vers l'extérieur et la face extérieure de la branche longitudinale (81) située à l'extérieur est par ailleurs alignée à peu près avec la face intérieure de la vitre extérieure (2).

28. Dispositif à battant de porte ou de croisée selon la revendication 27, en référence à la revendication 8, caractérisé en ce que la patte (87) dépasse du bourrelet (86) qui forme la zone de transition du profilé (80).

29. Dispositif à battant de porte ou de croisée selon l'une des revendications 25 à 28, caractérisé en ce que la zone de transition du profilé (80) présente une lèvre élastique (89) qui s'applique sur son bord contre la face extérieure de la vitre extérieure (2).

30. Dispositif à battant de porte ou de croisée sans cadre selon l'une des revendications 1 à 29, caractérisé en ce que le profilé (10 ; 60 ; 80) présente, dans ses ailes (61, 62) et/ou dans son aile transversale (63), des canaux (69, 70) dans lesquels des barres métalliques (75, 76 ; 92) peuvent être introduites ou noyées, quelques-uns au moins des canaux (69, 70) pouvant recevoir éventuellement par endroits des vis.

31. Dispositif à battant de porte ou de croisée sans cadre selon l'une des revendications 1 à 30, caractérisé en ce que des baguettes métalliques (71, 72 ; 90) sont fixées aux surfaces dirigées vers l'extérieur des ailes (61, 62 ; 81, 82) du profilé (60 ; 80), de manière que les vitres (2, 3) s'appliquent au moins contre les baguettes métalliques (71, 72 ; 90), mais au moins contre la surface dirigée vers l'extérieur de l'aile intérieur (82).

32. Dispositif à battant de porte ou de croisée selon la revendication 32, caractérisé en ce que les baguettes métalliques (71, 72 ; 90) sont coulées dans la matière du profilé (60 ; 80).

33. Dispositif à battant de porte ou de croisée selon la revendication 31 ou 32, caractérisé en ce que les surfaces des baguettes métalliques (71, 72 ; 90), qui sont dirigées vers les vitres (2, 3), sont des supports d'un produit adhésif.

34. Dispositif à battant de porte ou de croisée selon l'une des revendications 31 à 33, caractérisé en ce que les baguettes métalliques (71, 72 ; 90) sont en aluminium ou en alliage d'aluminium.

35. Dispositif à battant de porte ou de croisée selon l'une des revendications 30 et 31 ou l'une des revendications 32 à 34 lorsqu'il est fait référence aux revendications 30 et 31, caractérisé en ce que la barre métallique (92) est réalisée d'un seul tenant avec la baguette métallique (90).

36. Procédé de fabrication d'un Dispositif à battant de porte ou de croisée sans cadre avec vitrage isolant selon l'une des revendications 1 à 3 et 7 à 35 lorsqu'il est fait référence aux revendications 1 à 3, comportant les étapes suivantes :
- coupe d'une vitre en verre flotté pour la vitre extérieure (2),
- coupe d'une vitre en verre flotté pour la vitre intérieure (3),
- alésage d'ouverture (24, 25) pour des organes d'actionnement d'une armature dans la zone de bordure de la vitre en verre flotté pour la vitre intérieure (3),
- émaillage de la zone de bordure au moins de la vitre en verre flotté pour la vitre intérieure (3),
- traitement thermique au moins de la vitre en verre flotté pour la vitre intérieure (3) pour la cuisson de l'émaillage (23),
- traitement thermique simultané ou séparé au moins de la vitre en verre flotté pour la vitre intérieure (3) afin de former une vitre en verre de sécurité trempé,
- éventuellement revêtement d'au moins l'une des vitres (2, 3) avec une couche de protection contre la chaleur et le bruit et/ou de protection contre les rayonnements,
- ajustement, mise en place et assemblage ainsi que collage des deux vitres (2, 3) et d'un écarteur (4) de la manière usuelle pour les vitrages isolants,
- introduction d'une pâte de garnissage de bord de la manière usuelle pour les vitrages isolants,
- enfoncement du profilé en U (10) dans la pâte de garnissage de bord éventuellement jusqu'à l'application d'une patte (22) qui fait saillie vers l'extérieur du profilé du profilé (10), à l'extrémité éloignée de l'aile (12), associée à la vitre extérieure (3), contre la face frontale de la vitre extérieure (3),
- durcissement de la pâte de garnissage de bord jusqu'à ce qu'elle atteigne son état final élastique, et
- mise en place et montage de l'armature et de ses organes d'actionnement.
